(19) **Europäisches Patentamt / European Patent Office / Office européen des brevets**

(11) **EP 4 475 477 A1**

(12) **EUROPEAN PATENT APPLICATION**

(43) Date of publication:
**11.12.2024 Bulletin 2024/50**

(21) Application number: **23190147.1**

(22) Date of filing: **07.08.2023**

(51) International Patent Classification (IPC):
*H04L 9/00* (2022.01)    *H04L 9/08* (2006.01)

(52) Cooperative Patent Classification (CPC):
**H04L 9/085; H04L 9/008;** H04L 2209/46

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **06.06.2023   CN 202310667243**

(71) Applicant: **Beijing Volcano Engine Technology Co., Ltd.**
**Beijing 100190 (CN)**

(72) Inventors:
• **LIN, Yu**
  **Beijing 100028 (CN)**
• **CAI, Quanwei**
  **Beijing 100028 (CN)**
• **WU, Ye**
  **Beijing 100028 (CN)**

(74) Representative: **Dentons UK and Middle East LLP**
**One Fleet Place**
**London EC4M 7WS (GB)**

(54) **DATA PROCESSING METHODS AND ELECTRONIC DEVICE**

(57)    Data processing methods and electronic device are provided in embodiments of the present disclosure. A method comprises: at a first party in secure multi-party computation (MPC), performing secondary encryption on second encrypted identification information and second encrypted feature information of respective data entries in a second dataset of a second party in the MPC, to obtain second double-encrypted identification information and a first feature share of the second encrypted feature information; sending, to the second party, the first feature share of the second encrypted feature information of respective data entries in the second dataset, without sending the second double-encrypted identification information; receiving, form the second party, first double-encrypted identification information of respective data entries in a first dataset of the first party; generating intersection index information based on a matching result between the first double-encrypted identification information and the second double-encrypted identification information.

## Description

## Cross Reference to Related Applications

The present application claims priority to Chinese Patent Application No. 202310667243.X, entitled "DATA PROCESSING METHODS AND ELECTRONIC DEVICE," filed on June 6, 2023, the contents of which are hereby incorporated by reference in its entirety.

## Technical Field

Example embodiments of the present disclosure generally relate to the field of computers, and in particular to data processing methods, apparatuses, devices, and computer-readable storage mediums.

## Background

In recent years, due to factors such as user privacy, data security, legal compliance, and commercial competition, it has been difficult to integrate dispersed data sources legally and in compliance with regulations for computation, analysis, and learning. In this context, solutions based on Secure Multi-party Computing (MPC) have developed rapidly, allowing joint computing, joint data analysis, and joint machine learning across multiple dispersed data sources without the need to gather them together. The MPC aims to solve the problem of a group of untrusted parties performing collaborative computing while protecting data security, and to provide the data demander with a multi-party collaborative computing capability without disclosing the original data. The MPC may be used to support secure data cooperation and a fusion application, to collaborate with multiple data sources for computation and analysis on the premise of being legal and compliant with regulations and data not leaving the domain.

## Summary

In a first aspect of the present disclosure, a data processing method is provided. The method is implemented at a first party in secure multi-party computation MPC, and the method comprises performing secondary encryption on second encrypted identification information and second encrypted feature information of respective data entries in a second dataset of a second party in the MPC, to obtain second double-encrypted identification information and a first feature share of the second encrypted feature information; sending, to the second party, the first feature share of the second encrypted feature information of respective data entries in the second dataset, without sending the second double-encrypted identification information; receiving, form the second party, first double-encrypted identification information of respective data entries in a first dataset of the first party; generating intersection index information based on a matching result between the first double-encrypted identification information and the second double-encrypted identification information, the intersection index information comprising a true index for at least a pair of data entries and a pseudo index for at least a pair of data entries in the first dataset and the second dataset, identification information of data entries corresponding to the true index being matched, identification information of data entries corresponding to the pseudo index being unmatched; and sending the intersection index information to the second party, for determining a second intersection of the first dataset and the second date set by the second party.

In a second aspect of the present disclosure, a data processing method is provided. The method is implemented at a second party in secure multi-party computing MPC, and the method comprises performing secondary encryption on first encrypted identification information and first encrypted feature information of respective data entries in a first dataset that are received from a first party in the MPC, to obtain first double-encrypted identification information and a first feature share of the first encrypted feature information; sending at least the first double-encrypted identification information of respective data entries in the first dataset to the first party; receiving, from the first party, a first feature share of second encrypted feature information for respective data entries in a second dataset of the second party, without receiving second double-encrypted identification information of respective data entries in the second dataset; receiving intersection index information from the first party, the intersection index information comprising a true index for at least a pair of data entries and a pseudo index for at least a pair of data entries in the first dataset and the second dataset, and identification information of the at least a pair of data entries corresponding to the true index being matched; and determining, based on the intersection index information, a second intersection of the first dataset and the second dataset, the second intersection comprising at least a pair of data entries corresponding to the true index and at least a pair of data entries corresponding to the pseudo index in the intersection index information.

In a third aspect, a data processing apparatus is provided. The apparatus is implemented at a first party in secure multi-party computing MPC, and the apparatus comprises a secondary encryption module configured to perform secondary encryption on second encrypted identification information and second encrypted feature information of respective data entries in a second dataset of a second party in the MPC, to obtain second double-encrypted identification information and a first feature share of the second encrypted feature information. The apparatus further comprises a first sending module configured to send, to the second party, the first feature share of the second encrypted feature information of respective data entries in the second dataset, without sending the second double-encrypted identification information. The apparatus further comprises a first receiving module configured to receive, form the second party, first double-encrypted identification information of respective data entries in a first dataset of the first party. The apparatus further comprises an intersection index determination module configured to generate intersection index information based on a matching result between the first double-encrypted identification information and the second double-encrypted identification information, the intersection index information comprising a true index for at least a pair of data entries and a pseudo index for at least a pair of data entries in the first dataset and the second dataset, identification information of data entries corresponding to the true index being matched, identification information of data entries corresponding to the pseudo index being unmatched. The apparatus further comprises a second sending module configured to send the intersection index information to the second party, for determining a second intersection of the first dataset and the second date set by the second party.

In a fourth aspect, a data processing apparatus is provided. The apparatus is implemented at a first party in secure multi-party computing, and the apparatus comprises a secondary encryption module configured to perform secondary encryption on first encrypted identification information and first encrypted feature information of respective data entries in a first dataset that are received from a first party in the MPC, to obtain first double-encrypted identification information and a first feature share of the first encrypted feature information. The apparatus further comprises a first sending module configured to send at least the first double-encrypted identification information of respective data entries in the first dataset to the first party. The apparatus further comprises a first receiving module configured to receive, from the first party, a first feature share of second encrypted feature information for respective data entries in a second dataset of the second party, without receiving second double-encrypted identification information of respective data entries in the second dataset. The apparatus further comprises a second receiving module configured to receive intersection index information from the first party, the intersection index information comprising a true index for at least a pair of data entries and a pseudo index for at least a pair of data entries in the first dataset and the second dataset, and identification information of the at least a pair of data entries corresponding to the true index being matched. The apparatus further comprises a second intersection determination module configured to determining, based on the intersection index information, a second intersection of the first dataset and the second dataset, the second intersection comprising at least a pair of data entries corresponding to the true index and at least a pair of data entries corresponding to the pseudo index in the intersection index information.

In a fifth aspect, an electronic device is provided. The device comprises at least one processing module; and at least one memory coupled to the at least one processing module and storing instructions executable by the at least one processing module, the instructions, when executed by the at least one processing module, causing the device to perform the method of the first aspect.

In a sixth aspect, an electronic device is provided. The device comprises at least one processing module; and at least one memory coupled to the at least one processing module and storing instructions executable by the at least one processing module, the instructions, when executed by the at least one processing module, causing the device to perform the method of the second aspect.

In a seventh aspect, a computer readable storage medium is provided. The computer readable storage medium has a computer program stored thereon which, when executed by a processor, performs the method of the first aspect.

In an eighth aspect, a computer readable storage medium is provided. The computer readable storage medium has a computer program stored thereon which, when executed by a processor, performs the method of the second aspect.

It would be appreciated that the content described in the Summary section of the present disclosure is neither intended to identify key or essential features of the embodiments of the present disclosure, nor is it intended to limit the scope of the present disclosure. Other features of the present disclosure will be readily envisaged through the following description.

**Brief Description of Drawings**

The above and other features, advantages and aspects of the embodiments of the present disclosure will become more apparent in combination with the accompanying drawings and with reference to the following detailed description. In the drawings, the same or similar reference symbols refer to the same or similar elements, where:

FIG. 1 shows a schematic diagram of an example environment in which the embodiments of the present disclosure can be applied;
FIG. 2 shows a flowchart of a multi-party signaling flow for data processing according to some embodiments of the present disclosure;
FIG. 3 shows a schematic diagram of an example for intersection matching according to some embodiments of the present disclosure;
FIG. 4 shows a flowchart of a data processing signaling flow based on an example dataset according to some embodiments of the present disclosure;
FIG. 5 shows a flowchart of a data processing method implemented at a first party according to some embodiments of the present disclosure;
FIG. 6 shows a flowchart of a data processing method implemented at a second party according to some embodiments of the present disclosure;
FIG. 7 shows a schematic structural block diagram of a data processing apparatus implemented at a first party according to some embodiments of the present disclosure;
FIG. 8 shows a schematic structural block diagram of a data processing apparatus implemented at a second party according to some embodiments of the present disclosure; and
FIG. 9 shows a block diagram of an electronic device capable of implementing one or more embodiments of the present disclosure.

**Detailed Descriptions**

The embodiments of the present disclosure will be described in more detail below with reference to the accompanying drawings. Although some embodiments of the present disclosure are shown in the drawings, it would be appreciated that the present disclosure can be implemented in various forms and should not be interpreted as limited to the embodiments described herein. On the contrary, these embodiments are provided for a more thorough and complete understanding of the present disclosure. It would be appreciated that the drawings and embodiments of the present disclosure are only for purpose of illustration and are not intended to limit the scope of protection of the present disclosure.

In the description of the embodiments of the present disclosure, the term "including" and similar terms should be understood as open inclusion, that is, "including but not limited to". The term "based on" should be understood as "at least partially based on". The term "one embodiment" or "the embodiment" should be understood as "at least one embodiment". The term "some embodiments" should be understood as "at least some embodiments". Other explicit and implicit definitions may also be included below.

In this article, unless explicitly stated, performing a step "in response to A" does not mean performing the step immediately after "A", but may include one or more intermediate steps.

It is understandable that the data involved in this technical proposal (including but not limited to the data itself, data acquisition, use, storage, or deletion) shall comply with the requirements of corresponding laws, regulations and relevant provisions.

Firstly, a brief introduction is given to the terms involved in the embodiments of the present disclosure.

Secret share: an encryption method that splits a data value into multiple copies through some operation. For example, additive Secret share may split a data value into $x = x_1 + x_2$ two secret share values.

Secure multi-party computing (MPC): refers to the existence of N parties P1, P2,..., PN, where a party Pi has input data Xi, and N parties jointly calculate a function f (X1, X2,..., XN) without disclosing their input data to any other parties. The security of input data may be ensured by applying cryptography (such as Homomorphic Encryption), the secret share, differential privacy and other security mechanisms in the operation. For example, a secret share value of input data of multiple parties may calculate a specified arithmetic operation, a logic operation, and an output operation result is still in the form of secret share.

Elliptic Curve Diffie-Hellman key Exchange (ECDH): two parties implement a key exchange through the elliptic curve encryption algorithm.

Homomorphic Encryption (HE): is one of the methods to implement secure multi-party computation. Homomorphic Encryption allows performing a specific form of algebraic operation on ciphertext to obtain an operation result which is still in a ciphertext space. The encrypted data may be computed through homomorphic addition, multiplication, and other operations to obtain new ciphertext without decrypting the data. After decrypting the new ciphertext, data that has undergone a corresponding homomorphic operation may be obtained. That is to say, an operation in the ciphertext space is equivalent to an operation in a plaintext space. Therefore, a Homomorphic Encryption technology may be used to operate on the encrypted data without decrypting data in the whole operation process.

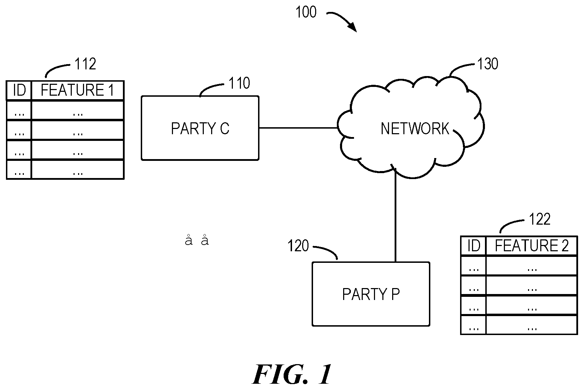

FIG. 1 shows a schematic diagram of an example environment 100 in which embodiments of the present disclosure can be applied. The environment 100 relates to secure computation based on an MPC protocol. For purpose of illustration, a party 110 (sometimes referred to as a first party, a party C, or a C party herein) and a party 120 (also referred to as a second party, a party P, or a P party) are shown. The party 110 has its own dataset 112, and the party 120 has its own dataset 122. In an MPC operation, two parties expect to perform a specified operation while ensuring the data security of their respective datasets.

Each dataset in the dataset 112 and the dataset 122 may include one or more data entries, each of which includes identification information and feature information. The identification information of each data entry may include identifiers (ID) corresponding to one or more identification types, and the feature information may include features corresponding to one or more feature types. The identification information section is used to identify or differentiate the feature information section. For example, for a dataset that records advertising placement, types of identification information may include an advertising placement platform identification and an advertising placement user identification, while types of feature information may include whether an advertisement has been clicked on, duration of time an advertisement has been watched, and whether an advertisement has been added to favorites.

In some implementations, the identification information of the dataset 112 and the dataset 122 may include one or more identical identification types, for example both include the advertising placement platform identification and the advertising placement user identification. In some implementations, the feature information of the dataset 112 and the dataset 122 may include one or more identical feature types or may include completely different feature types.

In FIG. 1, either the party 110 or the party 120 may correspond to any type of one or more electronic devices with computing capabilities, including terminal devices or server devices. The terminal device may be any type of mobile terminal, fixed terminal or portable terminal, including a mobile phone, a desktop computer, a laptop computer, a notebook computer, a netbook computer, a tablet computer, a media computer, a multimedia tablet, a personal communication system (PCS) device, a personal navigation device, a personal digital assistant (PDA), an audio/video player, a digital camera/camera, a positioning device, a television receiver, a radio broadcasting receiver, an e-book device, a gaming device, or any combination thereof, including accessories and peripherals of these devices or any combination thereof. For example, the server device may include a computing system/server, such as a mainframe, an edge computing node, a computing device in a cloud environment, and so on.

It should be understood that the description of the structure and functionality of the environment 100 is only for purpose of illustration and does not imply any limitations on the scope of the present disclosure. For example, although it is not shown in FIG. 1, in some cases, MPC operations may also involve more parties, each of which may have its own dataset.

In an MPC operation, it is sometimes necessary to determine intersection matching between datasets of multiple parties. For example, multiple parties each input a dataset and determine the intersection of multiple datasets without compromising the intersection of both parties. The intersection here refers to data entries that match the identification information in two datasets. In some implementations, the combination of different feature information indexed by a same identifier in two datasets may be determined through the intersection matching. In some implementations, in a case where matched identification information is obtained, a password share of feature information of data entries in the intersection may also be generated for a subsequent MPC operation.

In some intersection matching schemes, an anonymous identity (ID) of a union of both parties is generated based on the ECDH technology, and an intersection part of both parties may be mapped to a same anonymous ID. Afterwards, the both parties perform the MPC protocol through the anonymous ID to complete a subsequent computation. However, the result generated by this type of protocol is a union of both parties. When the amount of data on both parties is unbalanced, the scale of the union is large, but the scale of an intersection part with actual meaning is very few, it may result in significant additional costs for a subsequent MPC computing protocol.

In other schemes, an intersection ID of both parties is matched in the form of secret share based on the MPC protocol, and a secret share with features of both parties is generated at the same time. However, such schemes have a high requirement for communication conditions and are difficult to achieve multi-ID matching. Moreover, when a dataset contains duplicate IDs, the computational cost is relatively high.

Currently, it is expected to provide an intersection matching scheme that is efficient in communication and computation, and can ensure the security of intersection information.

According to the example embodiments of the present disclosure, an improved scheme for data processing is provided. According to this scheme, for a first party with a first dataset and a second party with a second dataset in MPC, the first party obtains second encrypted identification information and second encrypted feature information of respective data entries in the second dataset of the second party, and performs secondary encryption, to obtain second double-encrypted identification information and a feature share of the second encrypted feature information. The first party sends the feature share of the second encrypted feature information to the second party (P), without sending the second double-encrypted identification information. The first party receives first double-encrypted identification information of respective data entries in the first dataset from the second party. In this way, the first party can generate intersection index information for the first dataset and the second dataset based on a matching result between the first double-encrypted identification information and the second double-encrypted identification information.

The intersection index information comprises a true index for at least a pair of data entries and a pseudo index for at least a pair of data entries in the first dataset and the second dataset. Identification information of data entries corresponding to the true index is matched, and identification information of data entries corresponding to the pseudo index is unmatched. Through the intersection index information, the first party can obtain intersection scale of the first dataset and the second dataset accurately. Certainly, since the identification information and the feature information of the second dataset are encrypted, specific identification information and specific feature information will not be leaked to the first party.

In addition, because the intersection index information contains a pseudo index, an intersection determined by the second party based on the intersection index information, after the intersection index information being provided to the second party from the first party, may not be accurate. This may support that not disclosing the intersection scale of two datasets to the second party, and is of great significance in practical applications that require hiding the intersection scale from the second party.

In some embodiments of the present disclosure, it is also proposed that based on the intersection index information containing a pseudo index, the first party and the second party determine a first intersection and a second intersection respectively, and perform an MPC operation based on the first intersection and the second intersection. Due to the fact that the first party can obtain a true matching status of the identification information, while the second party cannot determine the true matching status of the identification information, a correct MPC operation may be completed by setting a matching flag on the first intersection and the second intersection respectively.

In some embodiments of the present disclosure, an efficient encryption method for feature information in the first dataset and the second dataset is also proposed. In some embodiments in the present disclosure, a scheme supporting multiple ID matching is also proposed. In a case where the identification information includes multiple types of identifiers, the intersection index information can be determined based on a type of identifier. Moreover, in the embodiments of the present disclosure, it may also support the inclusion of duplicate elements in the dataset, for example, in a case where same identification information of data entries repeatedly presents, the intersection matching may also be performed.

The following will continue to refer to the accompanying drawings to describe some example embodiments of the present disclosure.

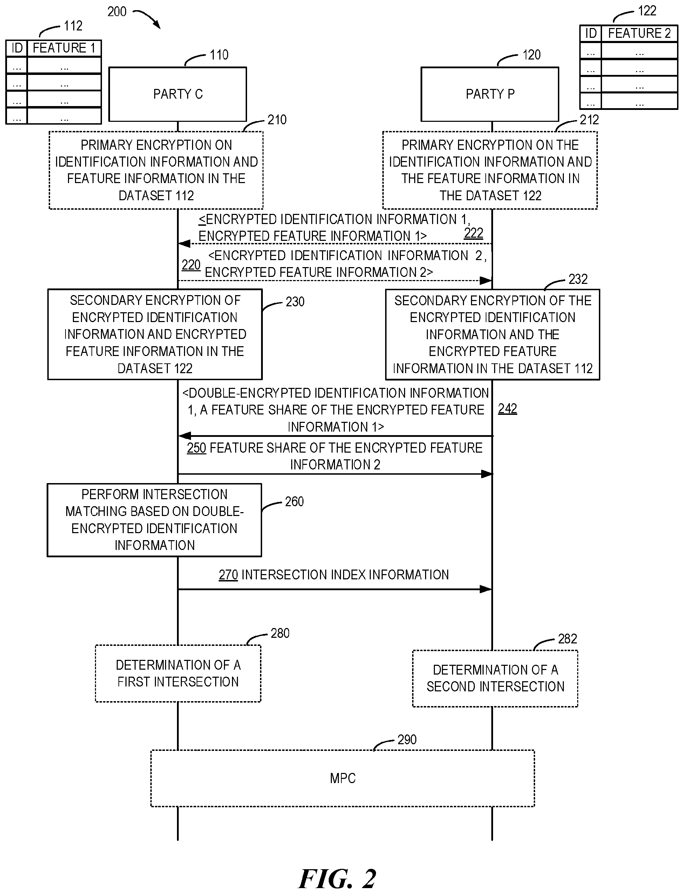

FIG. 2 shows a flowchart of a multi-party signaling flow 200 for data processing according to some embodiments of the present disclosure. For the convenience of discussion, the signaling flow 200 will be described with reference to the environment 100 of FIG. 1. The signaling flow 200 involves the party 110 and the party120.

In the signaling flow 200, the party 110 performs secondary encryption (230) on encrypted identification information and encrypted feature information of respective data entries in the dataset 122 of the party 120. Similarly, the party 120 performs the secondary encryption (232) on the encrypted identification information and the encrypted feature information of respective data entries in the dataset 112 of the party 110. The party 110 and the party 120 may obtain the encrypted identification information and the encrypted feature information of each other's dataset through various methods.

In some embodiments, in an initial stage, the party 110 may perform primary encryption (210) on identification information and feature information of respective data entries in its own dataset 112, to obtain the encrypted identification information and the encrypted feature information (marked as "encrypted identification information 1" and "encrypted feature information 1" in FIG. 2, respectively). The party 120 may perform the primary encryption (212) on the identification information and the feature information of respective data entries in its own dataset 122, to obtain the encrypted identification information and the encrypted feature information (marked as "encrypted identification information 2" and "encrypted feature information 2" in FIG. 2, respectively).

The party 110 may send (220) the encrypted identification information and the encrypted feature information of the dataset 112 to the party 120 for the secondary encryption (232) to be performed by the party 120. Similarly, the party 120 may send (222) the encrypted identification information and the encrypted feature information of the dataset 122 to the party 110 for the secondary encryption (230) to be performed by the party 110.

For example, for ease of understanding, it is assumed that the identification information of each data entry in the dataset 112 or the dataset 122 comprises one or more types of identifiers (IDs), and the feature information comprises one or more types of features. It is assumed that data entries in the dataset 112 and the dataset 122 both include $k$ IDs; the dataset 112 includes $n_c$ data entries, each of which includes $m_c$ features; the dataset 122 includes $n_p$ data entries, each of which includes $m_p$ features.

In this way, the dataset 112 may be represented in a form of a two-dimensional matrix, represented as

$$\left\{\left(Cid_{i,0'}\ldots, Cid_{i,k-1'}u_{i,0'}\ldots, u_{i,m_c}\right)\right\}_{i\in[n_c]}$$

(a form of $[n_c]$ is used here to represent a range $[0, n_c)$, same below), where $Cid_{i,0}$ refers to an identifier $ID_0$ of the $i^{th}$ data entry... $Cid_{i,0}$ refers to an identifier $ID_{k-1}$ of the $i^{th}$ data entry, $u_{i,0}$ refers to a feature 0 of the $i^{th}$ data entry, and $u_{i,m_c}$ refers to a feature $m_c$ of the $i^{th}$ data entry. Similarly, the dataset 122 may be represented as

$$\left\{\left(Pid_{i,0'}\ldots, Pid_{i,k-1'}v_{i,0'}\ldots, v_{i,m_p}\right)\right\}_{i\in[n_p]}$$

In some embodiments, considering the need for subsequent encryption for the identification information and the feature information in the dataset 112 and the dataset 122, during an initialization stage, the party 110 and the party 120 may determine an encryption method and key to be used respectively.

In some embodiments, the identification information in the dataset 112 and the dataset 122 may be realized based on the elliptic curve encryption algorithm, and the party 110 and the party 120 may realize the key exchange through the ECDH. For example, the party 110 may randomly select an elliptic curve encryption key $r_c$; and the party 120 may randomly select an elliptic curve encryption key $r_p$. In other embodiments, the encryption for the identification information may also be based on any other appropriate encryption algorithm, as long as the party 110 and the party 120 choose a key used for encrypting the identification information respectively.

In some embodiments, the feature information in the dataset 112 and the dataset 122 may be encrypted based on the Homomorphic Encryption (HE) algorithm. The feature information after the HE may be computed new ciphertext without decrypting the feature information through homomorphic addition and homomorphic multiplication. After decrypting the new ciphertext, feature information that has undergone a corresponding homomorphic operation may be obtained. In some embodiments, a subsequent MPC computation may be supported based on the encrypted feature information in the dataset 112 and the dataset 122 by applying the HE. The party 110 and the party 120 may choose any appropriate HE algorithm, one example of which is Paillier HE. In some embodiments, the party 110 may generate random homomorphic encrypted public key and private key, that is $(pk_c, sk_c)$, the party 110 may send the public key $pk_c$ to the party 120. Similarly, the party 120 may generate random homomorphic encrypted public key and private key, that is $(pk_p, sk_p)$, and the party 120 may send the public key $pk_p$ to the party 110.

After determining the encryption method during the initialization stage mentioned above, the party 110 and the party 120 may perform the exchange of the encrypted identification information and the encrypted feature information for their respective datasets. In some embodiments, the exchange of the encrypted identification information and the encrypted feature information may be triggered by either party. In some embodiments, if the party 120 is a client capable of being called multiple times and the party 110 is a server side, the party 120 may first initiate a request to send the encrypted identification information and the encrypted feature information of the dataset 122 to the party 110. In some embodiments, after receiving the request, the party 110 may determine whether to fill in a pseudo data entry in the dataset 112 according to the size (that is, the number of data entries) of the dataset 122 of the client 120. It should be understood that the party 110 and the party 120 may correspond to different entities in different application scenarios, and their intersection matching may be triggered based on any reason, by either party, or through negotiation between both parties.

In some embodiments, during the primary encryption stage (that is, the primary encryption 210 and the primary encryption 212 in the signaling flow 200) of the dataset 112 and the dataset 122, the party 110 and the party 120 may use the ECDH technology to generate the encrypted identification information and use the HE encryption technology to encrypt the feature information, and send their respective encrypted identification information and encrypted feature information to each other.

In some embodiments, before the encryption, the party 110 may perform disorder processing on respective data entries in the dataset 112. Alternatively, or in addition, the party 120 may perform disorder processing on respective data entries in the dataset 122.

In some embodiments, when encrypting the identification information, the party 110 may use a first encryption key, such as an elliptic curve encryption key

$r_c$, to encrypt the identification information $Cid_{i,j}$ of respective data entries in the dataset 112, to obtain the encrypted identification information (that is, $Cid'_{i,j} = r_c \cdot H(Cid_{i,j})$) of the dataset 112. In this way, the identification information of respective data entries in the dataset 112 is randomized. Similarly, the party 120 may use a second encryption key, such as an elliptic curve encryption key $r_p$, to encrypt the identification information $Pid_{i,j}$ of respective data entries in the dataset 122, to obtain the encrypted identification information (that is, $Pid'_{i,j} = r_p \cdot H(Pid_{i,j})$) of the dataset 122. In this way, the identification information of respective data entries in the dataset 112 is randomized. In the encryption process,

$$H: \{0, 1\}^* \rightarrow \mathbb{G}$$

is a hash function that maps any input to an elliptic curve point. Certainly, as mentioned above, the encryption of the identification information may also be based on any other appropriate encryption algorithm.

When encrypting the feature information, the party 110 may use an appropriate encryption algorithm, for example Paillier encryption, to encrypt the feature information of the dataset 112. For example, the party 110 may use the key $sk_c$ generated in the initialization stage to perform the HE on the feature information of respective data entries in the dataset 112. Similarly, the party 120 may use an appropriate encryption algorithm, such as Paillier encryption, to encrypt the feature information of the dataset 122. For example, the party 120 may use the key $sk_c$ generated in the initialization stage to perform the HE on the feature information of respective data entries in the dataset 122.

In some embodiments, a method of batch encryption is also proposed to improve encryption efficiency of the feature information. For example, assuming that a batch size for the batch encryption is a predetermined number (represented as B), that is, B data entries are encrypted each time. The party 110 sequentially divides the feature information $u_{i,j}$ of respective data entries in the dataset 112 into at least one feature information block, and each feature information block comprises a sequential concatenation of the feature information in B data entries of the dataset 112. In addition, predetermined information is filled in between two adjacent data entries in each feature information block, to separate respective data entries from each other. For example, the party 110 may concatenate or encode the feature information of the number of B data entries as: $u_{i',j} = u_{i,j} \| 0\|u_{i+1,j}\|0\| \cdots \|u_{i+B-1,j}$. Respective feature information may be concatenated by bit and represented by $\|$. The predetermined information filled in between two adjacent data entries may be a bit value of 0. Certainly, it may also be any other predetermined symbol or predetermined value.

By encoding the feature information block, a number of feature information blocks $U_{i',j}$ that need to be

encrypted is $\left\lceil \frac{n_c}{B} \right\rceil$, where $\lceil \; \rceil$ represents rounding up. $\left\lceil \frac{n_c}{B} \right\rceil$ is lower than the number of data entries $n_c$ in the dataset 112. After encoding, as the number decreases, the encrypted identification information $Cid'_{i,j}$ of the number of B data entries included in each feature information block $U_{i',j}$ is used to index the feature information block $U_{i',j}$. In the dataset 112, each feature information block is represented as $\left\{ U_{i',j} \right\}_{i'\in\lceil \frac{n_c}{B} \rceil, j\in[m_c]}$, and a corresponding identification information is represented as

$$\left\{ \left( Cid'_{i,j'} \, ..., \, Cid'_{i+B-1,j} \right) \right\}_{i\in\lceil \frac{n_c}{B} \rceil, j\in[m_c]}.$$

The party 110 then encrypts at least one feature information block $U_{i',j}$ to obtain respective encrypted feature information $\tilde{U}_{i',j}$ of the at least one feature information block $\tilde{U}_{i',j}$. In some embodiments, the party 110 may use the HE, for example Paillier encryption, to encrypt the feature information block $U_{i',j}$ using the public key $pk_c$, to obtain $\tilde{U}_{i',j} = Enc(U_{i',j}, pk_c)$.

Similarly, in order to improve the encryption efficiency of the feature information, the party 120 may also use a method of batch encryption to encrypt the feature information of respective data entries in the dataset 122. In some embodiments, the batch size used by the party 120 to perform the batch encryption may be the same as the batch size used by the party 110, that is, to encrypt the number of B data entries each time. The party 120 divides the feature information $v_{i,j}$ of respective data entries in the dataset 122 in sequence into at least one feature information block, and each feature information block comprises a sequential concatenation of the feature information in the number of B data entries in the dataset 122. In addition, predetermined information is filled in between two adjacent data entries in each feature information block, to separate respective data entries from each other. For example, the party 120 may concatenate or encode the feature information of the number of B data entries as: $V_{i',j} = v_{i,j} \parallel 0 \parallel v_{i+1,j} \parallel 0 \parallel \cdots \parallel v_{i+B-1,j}$. Respective feature information may be concatenated by bit and represented by $\parallel$. The predetermined information filled in between two adjacent data entries may be a bit value of 0. Certainly, it may also be any other predetermined symbol or predetermined value.

By encoding the feature information block, a number of feature information blocks $V_{i',j}$ that need to be encrypted is $\left\lceil \frac{n_p}{B} \right\rceil$, where $\lceil \; \rceil$ represents rounding up. $\left\lceil \frac{n_p}{B} \right\rceil$ is lower than the number of data entries $n_p$ in the dataset 122. After encoding, as the number decreases, the encrypted identification information $Pid'_{i,j}$ of the number of B data entries included in each feature information block $V_{i',j}$ is used to index the feature information block $V_{i',j}$. In the dataset 122, each feature information block is represented as $\left\{ \tilde{V}_{i',j} \right\}_{i'\in\lceil \frac{n_p}{B} \rceil, j\in[m_p]}$, and a corresponding identification information is represented as $\left\{ \left( Pid'_{i,j'} \, ..., \, Pid'_{i+B-1,j} \right) \right\}_{i\in\lceil \frac{n_p}{B} \rceil, j\in[m_p]}$.

The party 120 then encrypts at least one feature information block $V_{i',j}$ to obtain respective encrypted feature information $\tilde{V}_{i',j}$ of the at least one feature information block $V_{i',j}$. In some embodiments, the party 120 may use the HE, for example Paillier encryption, to encrypt the feature information block $\tilde{V}_{i',j}$ using the public key $pk_p$, to obtain $\tilde{V}_{i',j} = Enc(V_{i',j}, pk_p)$.

After completing the primary encryption of the identification information and the feature information of the dataset 112, the party 110 sends the encrypted identification $Cid'_{i,j}$ and the encrypted feature information $\tilde{U}_{i',j}$ of the dataset 112 to the party 120. After completing the primary encryption of the identification information and the feature information of the dataset 122, the party 120 sends the encrypted identification information $Pid'_{i,j}$ and the encrypted feature information $\tilde{V}_{i',j}$ of the dataset 122 to the party 120.

After receiving the encrypted identification information $Pid'_{i,j}$ and the encrypted feature information $\tilde{V}_{i',j}$ of the dataset 122, the party 110 performs secondary encryption (230) on the encrypted identification information $Pid'_{i,j}$ and the encrypted feature information $\tilde{V}_{i',j}$ in the dataset 122 of the party 120. Similarly, after receiving the encrypted identification information $Cid'_{i,j}$ and the encrypted feature information $\tilde{U}_{i',j}$ of the dataset 112, the party 120 performs secondary encryption (232) on the encrypted identification information $Cid'_{i,j}$ and the encrypted feature information $\tilde{U}_{i',j}$ in the dataset 112 of the party 110.

When the party 110 performs secondary encryption on the encrypted identification information $Pid'_{i,j}$ and the encrypted feature information $\tilde{V}_{i',j}$ in the dataset 122 of the party 120, the party 110 may perform disorder processing on the encrypted identification information $Pid'_{i,j}$ and the encrypted feature information $\tilde{V}_{i',j}$ in the dataset 122. For example, the party 110 may adjust the sequence of the encrypted identification information $Pid'_{i,j}$ and the encrypted feature information $\tilde{V}_{i',j}$ in the dataset 122 through random permutation. Such disorder processing may further prevent both parties from inferring an original dataset according to the sequence of the feature information during a subsequent intersection computation. In some examples, the party 110 may generate a random permutation $\pi_c$ indicating a positional permutation for each encrypted identification information $Pid'_{i,j}$ and its encrypted feature information $\tilde{V}_{i',j}$ within a

range $\left[0, \lceil \frac{n_p}{B} \rceil \right)$. Then, the party 110 may apply the random permutation $\pi_c$ to the received encrypted identification information $\left\{\left(Pid'_{i,j}, \ldots, Pid'_{i+B-1,j}\right)\right\}_{i \in \lceil \frac{n_p}{B} \rceil, j \in [m_p]}$ and the encrypted feature information $\left\{\tilde{V}_{i',j}\right\}_{i' \in \lceil \frac{n_p}{B} \rceil, j \in [m_p]}$ of the party 120 according to the batch size to disrupt the data sequence. Then, the party 110 may perform the secondary encryption on the encrypted identification information $Pid'_{i,j}$ and the encrypted feature information $\tilde{V}_{i',j}$ after the sequence is adjusted.

In some embodiments, when performing the secondary encryption on the encrypted identification information $Pid'_{i,j}$ in the received dataset 122, the party 110 may reuse the first encryption key (for example, the elliptic curve encryption key $r_c$ used to perform the primary encryption on the identification information in the dataset 112) to perform the secondary encryption on the encrypted identification information $Pid'_{i,j}$ in the dataset 122, to obtain the double-encrypted identification information

$$\widetilde{Pid}_{i,j} = r_c r_p \cdot H\left(Pid_{i,j}\right)$$ of the dataset 122.

In some embodiments, when performing the secondary encryption on the encrypted feature information $\tilde{V}_{i',j}$ in the received dataset 122, the party 110 may generate a first feature share of the encrypted feature information $\tilde{V}_{i',j}$ in the dataset 122 through a method of feature share. Considering that the encrypted feature information $\tilde{V}_{i',j}$ in the dataset 122 is encrypted by batch and then encoded through batch encryption, when performing the secondary encryption on the encrypted feature information $\tilde{V}_{i',j}$, the party 110 may generate a second feature share $\left\{\gamma_{i,j}\right\}_{i \in n_p, j \in m_p}$ corresponding to respective data entries in the dataset 122 and encode the feature share with the same batch size B, for example, encode a negative value of the feature share with the same batch size B. The party 110 may divide the feature share $\left\{\gamma_{i,j}\right\}_{i \in n_p, j \in m_p}$ in sequence into at least one feature share block $[V_{i',j}]_1$, and each feature share block comprises a sequential concatenation of the feature share corresponding to the number of B data entries, that is $[V_{i',j}]_1 = -\gamma_{i,j} \| 0 \| - \gamma_{i+1,j} \| 0 \| \cdots \| - \gamma_{i+B-1,j}$, where predetermined information (for example, a bit value of 0) is filled in between two adjacent feature shares.

Then, the party 110 performs a homomorphic addition operation on the encrypted feature information $\tilde{V}_{i',j}$ of the received dataset 122 based at least on one feature share block $[V_{i',j}]_1$, to obtain the first feature share

$$\left[\widetilde{V_{i',j}}\right]_0 = Add\left(\tilde{V}_{i',j}, [V_{i',j}]_1\right)$$ of the encrypted feature information $\tilde{V}_{i',j}$. Through feature share, the encrypted feature information $\tilde{V}_{i',j}$ of data entries in the dataset 122 is divided into two parts: the first feature share $\left[\widetilde{V_{i',j}}\right]_0$ and the second feature share $[V_{i',j}]_1$. The sum of these two parts is equal to the encrypted feature information $\tilde{V}_{i',j}$.

Similarly, when the party 120 performs the secondary encryption on the encrypted identification information $Cid'_{i,j}$ and the encrypted feature information $\tilde{U}_{i',j}$ in the dataset 112 of the party 110, the party 120 may perform disorder processing on the encrypted identification information $Cid'_{i,j}$ and the encrypted feature information $\tilde{U}_{i',j}$ in the dataset 112. For example, the party 120 may adjust the sequence of the encrypted identification information $Cid'_{i,j}$ and the encrypted feature information $\tilde{U}_{i',j}$ in the dataset 112 through random permutation. Such disorder processing may further prevent both parties from inferring the original dataset according to the sequence of the feature information during subsequent intersection computation. In some examples, the party 120 may generate a random permutation $\pi_p$ indicating the positional permutation for each encrypted identification information $Cid'_{i,j}$ and its encrypted feature information $\tilde{U}_{i',j}$ within a range $\left[0, \lceil \frac{n_c}{B} \rceil \right)$. Then, the party 120 may apply the randomly permutation $\pi_p$ to the received encrypted identification information $\left\{\left(Cid'_{i,j}, \ldots, Cid'_{i+B-1,j}\right)\right\}_{i \in \lceil \frac{n_c}{B} \rceil, j \in [m_c]}$ and the encrypted feature information $\left\{\tilde{U}_{i',j}\right\}_{i' \in \lceil \frac{n_c}{B} \rceil, j \in [m_c]}$ of the party 110 according to the batch size to disrupt the data sequence. Then, the party 120 may perform the secondary encryption on the encrypted identification information $Cid'_{i,j}$ and the encrypted feature information $\tilde{U}_{i',j}$ after the sequence is adjusted.

In some embodiments, when performing the secondary encryption on the encrypted identification information $Cid'_{i,j}$ in the received dataset 112, the party 120 may reuse the second encryption key (for example, the elliptic curve encryption key $r_p$ used to perform the primary encryption on the identification information in the dataset 122) to perform the secondary encryption on the encrypted identification information $Cid'_{i,j}$ in the dataset 112, to obtain the double-encrypted identification information

$$\widetilde{Cid}_{i,j} = r_p r_c \cdot H\left(Cid_{i,j}\right)$$ of the dataset 112.

In some embodiments, when performing the secondary encryption on the encrypted feature information $\tilde{U}_{i',j}$ in the received dataset 112, similar to the aforementioned description related to the party 110, the party 120 may also generate the first feature share of the encrypted feature information $\tilde{U}_{i',j}$ in the dataset 112 through the method of feature share. Considering that the encrypted feature information $\tilde{V}_{i',j}$ in the dataset 112 is encrypted by batch and then encoded through batch encryption, when performing secondary encryption on the encrypted feature information $\tilde{U}_{i',j}$, the party 120 may generate a second feature share $\left\{\delta_{i,j}\right\}_{i\in[n_c],j\in[m_c]}$ corresponding to respective data entries in the dataset 112 and encode the feature share with the same batch size B, for example, encode the negative value of the feature share with the same batch size B. The party 120 may divide the feature share $\left\{\delta_{i,j}\right\}_{i\in[n_c],j\in[m_c]}$ in sequence into at least one feature share block $[U_{i',j}]_1$, and each feature share block comprises the sequential concatenation of the feature share corresponding to the number of B data entries, that is $[U_{i',j}]_1 = -\delta_{i,j}\| 0\| - \delta_{i+1,j}\|0 \| ... \| - \delta_{i+B-1,j}$, where predetermined information (for example, a bit value of 0) is filled in between two adjacent feature shares.

Then, the party 120 performs a homomorphic addition operation on the encrypted feature information $\tilde{U}_{i',j}$ of the received dataset 112 based on at least one feature share block $[U_{i',j}]_1$, to obtain the first feature share

$$\left[\widetilde{U_{i',j}}\right]_0 = Add\left(\tilde{U}_{i',j}, \left[U_{i',j}\right]_1\right)$$

of the encrypted feature information $\tilde{U}_{i',j}$. Through secret share, the encrypted feature information $\tilde{U}_{i',j}$ of data entries in the dataset 112 is divided into two parts: the first feature share $\left[\widetilde{U_{i',j}}\right]_0$ and the second feature share $[U_{i',j}]_1$. The sum of these two parts is equal to the encrypted feature information $\tilde{U}_{i',j}$.

After the secondary encryption, the party 120 sends (242) at least the double-encrypted identification information $\widetilde{Cid}_{i,j}$ of the dataset 112 to the party 110. In some embodiments, the party 120 sends both the double-encrypted identification information $\widetilde{Cid}_{i,j}$ and the first feature share $\left[\widetilde{U_{i',j}}\right]_0$ of the encrypted feature information of the dataset 112, where the double-encrypted identification information $\widetilde{Cid}_{i,j}$ is used to identify the first feature share $\left[\widetilde{U_{i',j}}\right]_0$ of the encrypted feature information corresponding to the double-encrypted identification information.

The party 110 sends (250) the first feature share $\left[\widetilde{V_{i',j}}\right]_0$ of the encrypted feature information of the dataset 122 to the party 120, without sending the double-encrypted identification information $\widetilde{Pid}_{i,j}$. In this way, the party 120 will not be able to obtain the double-encrypted identification information $\widetilde{Pid}_{i,j}$ of the dataset 122. As will be described below, the double-encrypted identification information of the dataset 112 and the dataset 122 is used to determine the intersection index information of the two datasets. Disclosing a true intersection size of the two datasets to the party 120 may be avoided, by avoiding providing the double-encrypted identification information $\widetilde{Pid}_{i,j}$ of the dataset 122 to the party 120.

The information exchange between the party 110 and the party 120 during the primary encryption stage and the secondary encryption stage are discussed above.

After the information exchange, at the party 110 side, the double-encrypted identification information $\widetilde{Pid}_{i,j}$ of the dataset 122 and the second feature share $[V_{i',j}]_1$ of the encrypted feature information may be buffered. In addition, the party 110 further receives the double-encrypted identification information $\widetilde{Cid}_{i,j}$ of the dataset 112 and the first feature share $[U_{i',j}]_1$ of the encrypted feature information from the party 120. In some embodiments, the party 110 may use a key $sk_c$ to decrypt the first feature share $\left[\widetilde{U_{i',j}}\right]_0$ of the received encrypted feature information, to obtain the first feature share

$$[U_{i',j}]_0 = Dec\left(\left[\widetilde{U_{i',j}}\right]_0, sk_c\right)$$

of the decrypted feature information of the dataset 112. Then, the party 110 may buffer the double-encrypted identification information $\widetilde{Cid}_{i,j}$ of the dataset 112 and decrypt the first feature share $[U_{i',j}]_0$ of the feature information. In this way, the data buffered by the party 110 comprises <the double-encrypted identification information $\widetilde{Pid}_{i,j}$, the second feature share $[V_{i',j}]_1$>of the dataset 122 of the party 120, and <the double-encrypted identification information $\widetilde{Cid}_{i,j}$, the first feature share [U$_{i',j}$]$_0$>of its own dataset 112.

After the information exchange, at the party 120 side, the double-encrypted identification information $\widetilde{Cid}_{i,j}$ of the dataset 112 and the second feature share [U$_{i',j}$]$_1$ of the encrypted feature information may be buffered. In addition, the party 120 further receives the first feature share $\left[\widetilde{V_{i',j}}\right]_0$ of the encrypted feature information of the dataset 122 from the party 110. In some embodiments, the party 120 may use a key $sk_p$ to decrypt the first feature share $\left[\widetilde{V_{i',j}}\right]_0$ of the received encrypted feature information, to obtain the first feature share [V$_{i',j}$]$_0$

= $Dec\left(\left[\widetilde{V_{i',j}}\right]_0, sk_p\right)$ of the decrypted feature information of the dataset 122. Then, the party 110 may buffer the first feature share [V$_{i',j}$]$_0$ of the decrypted feature information of the dataset 122. In this way, the data buffered by the party 120 comprises <the double-encrypted identification information, the second feature share [U$_{i',j}$]$_1$> of the dataset 112 of the party 110, and <the first feature share [V$_{i',j}$]$_0$> of its own dataset 122.

Next, the party 110 performs (260) intersection matching based on the double-encrypted identification information $\widetilde{Cid}_{i,j}$ of the dataset 112 and the double-encrypted identification information $\widetilde{Pid}_{i,j}$ of the dataset 122. In the embodiments of the present disclosure, the intersection matching of two datasets refers to finding a data entry with matched (or identical) identification information in the two datasets. The party 110 generates intersection index information based on a matching result between the double-encrypted identification information $\widetilde{Cid}_{i,j}$ of the dataset 112 and the double-encrypted identification information $\widetilde{Pid}_{i,j}$ of the dataset 122, to indicate which data entries in the dataset 112 and the dataset 122 have matched identification information. As mentioned above, the double-encrypted identification information $\widetilde{Cid}_{i,j}$ of the dataset 112 is encrypted by the party 110 using the first encryption key $r_c$ and the party 120 using the second encryption key $r_p$, respectively, that is $\widetilde{Cid}_{i,j} = r_p\,r_c \cdot H\left(Cid_{i,j}\right)$, while the dou-

ble-encrypted identification information $\widetilde{Pid}_{i,j}$ of the dataset 122 is encrypted by the party 120 using the second encryption key $r_p$ and the party 110 using the first encryption key $r_c$, respectively, that is $\widetilde{Pid}_{i,j} = r_c r_p \cdot H\left(Pid_{i,j}\right)$. If the identification information of a data entry in the dataset 112 matches the identification information of a data entry in the dataset 122, then after the encryption by two keys $r_c$ and $r_p$, the identification information of these two data entries still matches. Therefore, a judgment on the matching of the identification information may be performed by the party 110 without disclosing the actual identification information.

Due to the fact that the batch encryption is not performed on the identification information, the double-encrypted identification information of the dataset 112 and the dataset 122 comprises the double-encrypted information corresponding to respective data entries in respective datasets. The generated intersection index information comprises a true index for at least a pair of data entries and a pseudo index for at least a pair of data entries in the dataset 112 and the dataset 122. The identification information of the data entries corresponding to the true index is matched (for example, the double-encrypted identification information $\widetilde{Cid}_{k,j}$ and $\widetilde{Pid}_{i,j}$ are equal), and the identification information of the data entries corresponding to the pseudo index is unmatched (for example, the double-encrypted identification information $\widetilde{Cid}_{k,j}$ and $\widetilde{Pid}_{i,j}$ are not equal). By determining the intersection index information, the party 110 may obtain data entries with truly matched identification information in the dataset 112 and the dataset 122. Therefore, the party 110 may determine the first intersection of the dataset 112 and the dataset 122 based on the matching result.

In some embodiments, the party 110 may also perform the intersection matching of multi-identifiers. For example, if the identification information of the dataset 112 and the dataset 122 comprises respective identifiers corresponding to a plurality of types, then the corresponding double-encrypted identification information $\widetilde{Cid}_{i,j}$ comprises a plurality of respective double-encrypted identifiers corresponding to the plurality of types, and the double-encrypted identification information $\widetilde{Pid}_{i,j}$ comprises the plurality of respective double-encrypted identifiers corresponding to the plurality of types. When generating the intersection index information, the party 110 may determine the matching result, based on priority levels of the plurality of types, between the dou-

ble-encrypted identification information $\widetilde{Cid}_{i,j}$ and the double-encrypted identification information $\widetilde{Pid}_{i,j}$. The logic of using the plurality of identifiers to match the intersection is: for each identifier type, finding the matching result, then filtering out the matching result of this identifier type from the double-encrypted identification information, and then using a next type of identifier for matching. This matching logic is adopted because it is commonly used in business practice. In business, the priority level of identifiers to be matched is usually specified for matching, and the matched intersection is no longer matched again with an identifier with a lower priority level, to avoid additional duplicate intersection combinations.

For example, according to the priority levels of the plurality of types, the party 110 may first compare the double-encrypted identifier corresponding to a first type in the double-encrypted identification information $\widetilde{Cid}_{i,j}$ with the double-encrypted identifier corresponding to the first type in the double-encrypted identification information $\widetilde{Pid}_{i,j}$ to determine a first matching result. The first type may be a type with a highest priority level among the plurality of types. The party 110 may generate a corresponding true index and/or pseudo index in the intersection index information based on the first matching result.

After the completion of the first type of comparison, in accordance with a determination that the first matching result indicates at least a pair of data entries with matched identification information in the dataset 112 and the dataset 122, the party 110 filters out the double-encrypted identification information of the at least a pair of matched data entry from the double-encrypted identification information $\widetilde{Cid}_{i,j}$ and the double-encrypted identification information $\widetilde{Pid}_{i,j}$, respectively, to obtain filtered double-encrypted identification information $\widetilde{Cid}_{i,j}$ and filtered double-encrypted identification information $\widetilde{Pid}_{i,j}$. Then, the party 110 may compare a second type in the identification information, where the priority level of the second type is lower than that of the first type. A second matching result may be determined by comparing the double-encrypted identifier corresponding to the second type in the filtered double-encrypted identification information $\widetilde{Cid}_{i,j}$ with the double-encrypted identifier corresponding to the second type in the filtered double-encrypted identification information

$\widetilde{Pid}_{i,j}$. The party 110 may further generate a corresponding true index and/or pseudo index in the intersection index information based on the second matching result.

After the completion of the second type of comparison, in accordance with a determination that the second matching result indicates at least a pair of data entries with matched identification information in the dataset 112 and the dataset 122, similarly, the party 110 may refilter out the double-encrypted identification information of the at least a pair of matched data entries from the filtered double-encrypted identification information $\widetilde{Cid}_{i,j}$ and the filtered double-encrypted identification information $\widetilde{Pid}_{i,j}$, and perform subsequent type of identifier matching.

For ease of understanding, for example, assuming that the dataset 112 of the party 110 and the dataset 122 of the party 120 have three types of identifiers i, j, and k. The double-encrypted identifiers of three data entries in the dataset 112 are [(i0, j2, k4), (i1, j3, k5), (i2, j4, k6)] respectively, and the double-encrypted identifiers of three data entries in the dataset 122 are [(i0, j2, k4), (i8, j3, k1), (i9, j2, k2)] respectively. According to priority matching of i, j, and k, a matching result obtained by using the first type of identifier i is<(i0, j2, k4), (i0, j2, k4)>, and corresponding feature information is matched. After filtering out the matching result, remaining double-encrypted identifiers in the dataset 112 are [(i1, j3, k5), (i2, j4, k6)], and remaining double-encrypted identifiers in the dataset 122 are [(i8, j3, k1), (i9, j2, k2)]. A matching result obtained by using the second type of identifier j is<(i1, j3, k5), (i8, j3, k1)>. After filtering out the matching results, remaining double-encrypted identifiers in the dataset 112 are [(i2, j4, k6)], and remaining double-encrypted identifiers in the dataset 122 are [(i9, j2, k2)]. The third type of identifier k has no matching intersection.

It should be noted that the double-encrypted identification information (i0, j2, k4) of the party 110 and the double-encrypted identification information (i9, j2, k2) of the party 120 are the same at the second type of identifier k, however since (i0, j2, k4) is filtered out in the first round, an intersection pair<(i0, j2, k4), (i9, j2, k2)>may not be matched.

At the party 110, indexes of both parties for all matching intersections may be obtained. In order not to disclose the intersection scale, the party 110 may generate an additional false intersection index and fill it in the intersection index information, causing a number of intersection indexes is $min(n_c, n_p)$.

In some embodiments, for any type of identifier in the double-encrypted identification information, the party 110 may traverse the double-encrypted identifica-

tion information $\widetilde{Pid}_{i,j}$ of the dataset 122 one by one to determine whether there is matched double-encrypted identification information in the dataset 112. If there is matched double-encrypted identification information, the party 110 may generate a true index (for example, $\langle k, i \rangle$) indicating that the identification information of a $k^{th}$ data entry in the dataset 112 matches an $i^{th}$ data entry in the dataset 122. Otherwise, the party 110 generates a pseudo index (also known as a false index), for example $\langle k', i \rangle$, where $k'$ is a value randomly selected within the range $[0, n_c)$. Certainly, or the other way around, the party 110 may generate the intersection index information by traversing the double-encrypted identification information $\widetilde{Cid}_{i,j}$ of the dataset 112 one by one. In addition, The party 110 may further record which indexes are true and which are false.

According to the aforementioned method, the intersection matching can be achieved when data entries in the dataset 112 and the dataset 122 are unmatched, or the identification information includes duplicate elements.

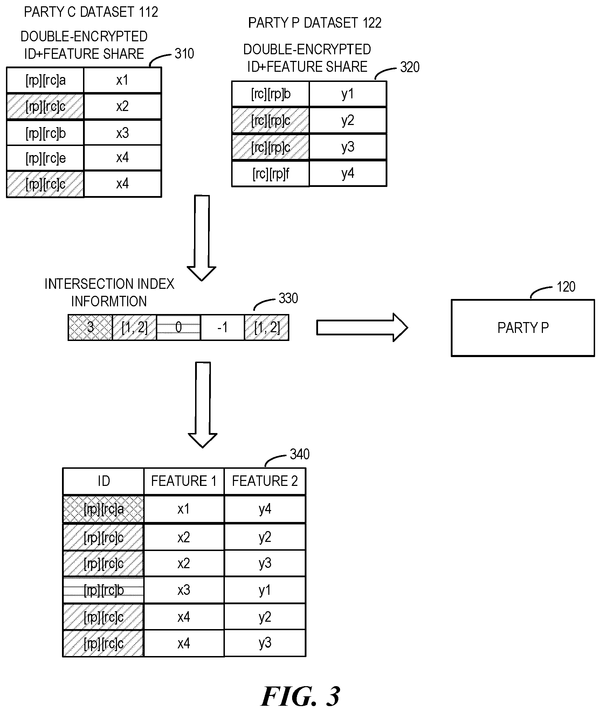

For ease of understanding, FIG. 3 shows a schematic diagram of an example for intersection matching according to some embodiments of the present disclosure. As shown in FIG. 3, the party 110 buffers the double-encrypted identification information of the dataset 112 and a feature share 310, and the double-encrypted identification information of the dataset 122 and a feature share 320. When performing the intersection matching, for the double-encrypted identification information [rp][rc]a in the dataset 112, the party 110 determines that there is no matched double-encrypted identification information in the double-encrypted identification information of the dataset 122. Therefore, a pseudo index 3 is generated in intersection index information 330, where 3 is a randomly selected value indicating that the $0^{th}$ data entry (pseudo) in the dataset 112 matches the $3^{rd}$ data entry in the dataset 122. A position of the index in the intersection index information 330 corresponds to a position of the data entry in the dataset 112. For the double-encrypted identification information [rp][rc]c in the dataset 112, the party 110 determines that both the double-encrypted identification information [rc][rp]c of the first data entry and second data entry in the dataset 122 match with it, thus a true index [1, 2] is generated in the intersection index information 330, indicating that a first data entry in the dataset 112 matches a first data entry and a second data entry in the dataset 122.

Similarly, for the double-encrypted identification information [rp] [rc]b and [rp] [rc]e in the dataset 112, no matched double-encrypted identification information is found in the dataset 122. Therefore, pseudo indexes 0 and -1 are generated in the intersection index information 330. For the double-encrypted identification information [rp][rc]c in the dataset 112, the party 110 determines that the double-encrypted identification information [rc][rp]c of both the first data entry and the second data entry in the dataset 122 match it, thus a true index [1, 2] is generated in the intersection index information 330, indicating that a fourth data entry in the dataset 112 matches the first data entry and the second data entry in the dataset 122. In the intersection index information 330, the party 110 may record which indexes are true and which are false.

In such a matching process, when there are $x$ data entries with same identification information at the party 110 and $y$ data entries at the party 120, a total number of $x \cdot y$ true intersection index pairs may be generated. This also conforms to the semantics of a dataset query, for example, inner join of a dataset in Structured Query Language SQL.

The party 110 sends (270) the intersection index information to the party 120 for determining the second intersection of the dataset 112 and the dataset 122 by the party 120. For example, the party 110 may send an index of matched data entry pairs (for example, $\langle k, i \rangle$, $\langle k', i \rangle$) to the party 120. Alternatively, the party 110 may send a true index or a false matched index in the determined dataset 112 to the party 120 in the sequence of the double-encrypted identification information of the dataset 122. In the example of FIG. 3, the intersection index information 330 is sent to the party 120. In this way, the party 120 may determine an intersection of two datasets from the intersection index information containing true and false indexes, but may not determine which data entry or which data entries are truly matched.

In some embodiments, continuing with reference to FIG. 2, after obtaining the intersection index information, the party 110 may generate (280) the first intersection of the dataset 112 and the dataset 122 based on the intersection index information. The first intersection comprises at least a pair of data entries corresponding to the true index and at least a pair of data entries corresponding to the pseudo index in the intersection index information. As mentioned above, <the double-encrypted identification information $\widetilde{Pid}_{i,j}$, the second feature share $[V_{i',j}]_1$> of the dataset 122 of the party 120, and < the double-encrypted identification information $\widetilde{Cid}_{i,j}$, the first feature share $[U_{i',j}]_0$> of its own dataset 112 are buffered at the party 110. The party 110 may use an index $\langle a, b \rangle$ in the intersection index information (real or false) to associate a feature share between the party 110 and the party 120. In this way, the party 110 may obtain $\left\langle \left\{ [U_{a,j}]_0 \right\}_{j \in [m_c]}, \left\{ [V_{b,j}]_1 \right\}_{j \in [m_p]} \right\rangle$. As shown in the example in FIG. 3, the party 110 may generate the first intersection 340 based on the intersection index information 330.

Similarly, the party 120 may generate (282) the second intersection of the dataset 112 and the dataset 122 based on the intersection index information. The second intersection comprises at least a pair of data entries corresponding to the true index and at least a pair of data entries corresponding to the pseudo index in the intersection index information. As mentioned above, the party 120 buffers <the double-encrypted identification information $\widetilde{Cid}_{i,j}$, the second feature share $[U_{i',j}]_1$> of the dataset 112 of the party 110, and <the first feature share $[V_{i',j}]_0$> of its own dataset 122. The party 120 may use an index $\langle a, b \rangle$ in the intersection index information (real or false) to associate a feature share between the party 110 and the party 120. In this way, the party 120 may obtain

$$\left\langle \left\{ [U_{a,j}]_1 \right\}_{j \in [m_c]}, \left\{ [V_{b,j}]_0 \right\}_{j \in [m_p]} \right\rangle.$$

It should be noted that the first intersection determined by the party 110 and the second intersection determined by the party 120 both comprise the double-encrypted identification information and the feature share of the feature information. The true identification information and feature information in the dataset 112 and the dataset 122 are not disclosed to each other.

Due to the fact that the party 110 knows the true index and the false index indicated by the intersection index information, the party 110 may set a matching flag for each pair of data entries in the first intersection. A matching flag of at least a pair of data entries corresponding to the true index is marked to indicate being matched, and a matching flag for at least a pair of data entries corresponding to the pseudo index is marked to indicate being unmatched. In some embodiments, a matching flag bit of a pair of data entries corresponding to the true index is set to 1, and a matching flag bit of the pair of data entries corresponding to the pseudo index is set to 0.

For example, the party 110 may additionally set a matching flag list in the first intersection, which records the matching flag (also refers to as is-real flag bit) for each pair of data entries for identifying whether the data entry is a true intersection or a falsely filled intersection. The party 110 may set the is-real flag bit of the truly matched intersection to 1, and set the is-real flag bit of the falsely matched intersection to 0 based on an actual filling situation.

At the party 120, the party 120 similarly sets the matching flag for the second intersection. Because the party 120 cannot determine which indexes indicated in the intersection index information are pseudo indexes, the party 120 may set the is-real flag bit of all data entries to indicate being unmatched, for example, all set to 0.

Continuing with reference to FIG. 2, the party 110 may perform the MPC (290) together with the party 120 using the first intersection and the second intersection. Because data entries in the first intersection and the second intersection also comprise a data entry with unmatched identification information, a candidate computation result may be obtained after performing the MPC using the first intersection and the second intersection. The party 110 may determine a target computation result of the MPC based on the determined candidate computation result of each pair of data entries in the first intersection and the matching flag for the first intersection. For example, if a matching flag of a pair of data entries corresponding to the true index in the matching flag bit of the first intersection is set to 1, and a matching flag of a pair of data entries corresponding to the pseudo index is set to 0, the party 110 may generate the target computation result based on a multiplication operation on the candidate computation result and the matching flag for each pair of data entries in the first intersection.

Similarly, the party 120 may determine the target computation result of the MPC based on the determined candidate computation result of each pair of data entries in the second intersection and the matching flag for the second intersection. If the matching flag of each pair of data entries in the second intersection are set to 0, the party 120 may generate the target computation result based on the multiplication operation on the candidate computation result and the matching flag for each pair of data entries in the second intersection.

Therefore, although neither the first intersection nor the second intersection is a true intersection result, a true intersection operation result may be preserved by calling the MPC multiplication to multiply an output candidate computation result and the is_real flag bit after the MPC operation.

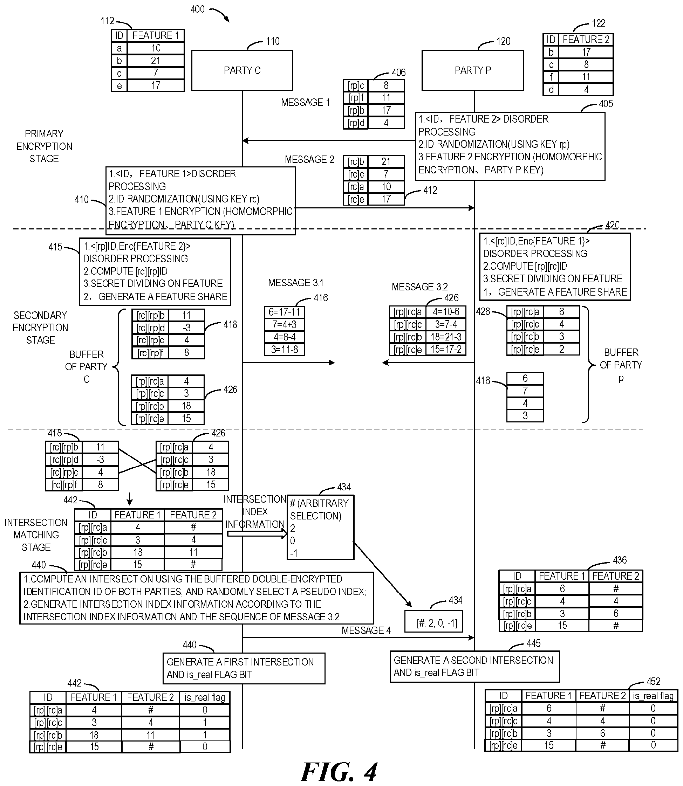

For better understanding, FIG. 4 shows a flowchart of a data processing signaling flow 400 based on an example dataset according to some embodiments of the present disclosure. The signaling flow 400 of FIG. 4 may be considered as an example of the signaling flow of FIG. 2. In FIG. 4, a specific example of the dataset 112 and the dataset 122 is provided to describe the various encryption and intersection stages with reference to the specific example.

As shown in FIG. 4, during a primary encryption stage, the party 120 performs an operation 405, including performing disorder processing on the identification information and the feature information in the dataset 122; randomizing the identification information, that is, performing primary encryption on the identification information using the second encryption key rp; and performing the primary encryption (for example, performing the HE using a party P key) on the feature information. The party 120 sends the encrypted identification information and the encrypted feature information (<[rp] ID, Enc(feature 2)>) 406 of the dataset 122 to the party 110 in message 1. It can be seen that in message 1, the data entries in the dataset 122 are disordered, and the identification information and the feature information are encrypted.

Similarly, in an encryption stage, the party 110 performs an operation 410, including disordering the identification information and the feature information in the dataset 112; randomizing the identification information, that is, performing the primary encryption on the identification information using the first encryption key rc; and performing the primary encryption on the feature information (for example, performing the HE using a party C key). The party 110 sends the encrypted identification information and the encrypted feature information (<[rp] ID, Enc(feature 1)>) 412 of the dataset 112 to the party 120 in Message 2. It can be seen that in message 2, the data entries in the dataset 112 are disordered, and the identification information and the feature information are encrypted.

In a secondary encryption stage, the party 110 performs an operation 415, including performing disordering processing on the received encrypted identification information and the encrypted feature information (<[rp] ID, Enc(feature 2)>) of the dataset 122 of the party 120; perform secondary encryption on the encrypted identification information [rp]ID using the first encryption key rc, to obtain the double-encrypted identification information [rc][rp]ID; and perform secret dividing on the encrypted feature information Enc(feature 2) to obtain the first feature share and the second feature share. The party 110 buffers the double-encrypted identification information [rc][rp]ID of the dataset 122 and a second feature share 418 of the encrypted feature information, and sends a first feature share 416 of the encrypted feature information of the dataset 122 to the party 120 in a message 3.1.

Similarly, in the secondary encryption stage, the party 120 performs an operation 420, including performing disorder processing on the received encrypted identification information and the encrypted feature information (<[rc] ID, Enc(feature 1)>) of the dataset 112 of the party 110; performing the secondary encryption on the encrypted identification information [rc]ID using the second encryption key rp, to obtain the double-encrypted identification information [rp] [rc]ID; and performing the secret dividing on the encrypted feature information Enc(feature 1), to obtain the first feature share and the second feature share. The party 120 buffers the double-encrypted identification information [rp] [rc]ID of the dataset 112 and a second feature share 428 of the encrypted feature information, and sends the double-encrypted identification information [rp] [rc]ID of the dataset 112 and a first feature share 426 of the encrypted feature information to the party 110 in message 3.2.

In this way, the party 110 buffers the double-encrypted identification information [rc] [rp]ID of the dataset 122 and the second feature share 418 of the encrypted feature information, and the double-encrypted identification information [rp] [rc]ID of the dataset 112 received from the party 120 and the first feature share 426 of the encrypted feature information. The party 120 buffers the double-encrypted identification information [rp] [rc]ID of the dataset 112 and the second feature share 428 of the encrypted feature information, and the first feature share 416 of the encrypted feature information of the dataset 122 received from the party 110.

In an intersection matching stage, the party 110 may perform an operation 340, including computing an intersection using the buffered double-encrypted identification information [rc] [rp]ID of the dataset 122 and the double-encrypted identification information [rp] [rc]ID of the dataset 112, and randomly selecting a pseudo index; generating intersection index information 434 according to the index of the matched data entry indicated by the intersection index information and the sequence of data entries in message 3.2. The party 110 sends the intersection index information 434 to the party 120 in message 4. In addition, the party 110 generates a first intersection 442 based on the intersection index information 434, and also generates a matching flag (is_real flag bit) of respective data entries in the first intersection 442. The first intersection 442 includes the double-encrypted identification information [rp] [rc]ID of the dataset 112, the feature share of the dataset 112 and the dataset 122 buffered by the party 110, and is_real flag bit.

After receiving the intersection index information 434 from the party 110, the party 120 may perform an operation 445 to generate a second intersection 436, and may further set a matching flag for the second intersection to obtain a second intersection 452. The second intersection 452 includes the double-encrypted identification information [rp] [rc]ID of the dataset 112 buffered by the party 120, the feature share between the dataset 112 and the dataset 122, and is_ real flag bit.

The party 110 may set the is_real flag bit of the true intersection to 1, set the is_real flag bit of the false intersection to 0 according to an actual filling situation in the intersection index information. While the party 120 set all the is_real flag bits to 0. When performing the MPC operation based on the first intersection and the second intersection, a true intersection operation result may be preserved by calling the MPC multiplication to multiply the candidate result and the is_real flag bit.

According to the embodiments of the present disclosure, not disclosing the scale of the intersection to one party and letting the other party obtain the real scale of the intersection may be supported without exposing the real information of datasets of both parties. In addition, in some embodiments, it may also support obtaining the feature share required by the MPC protocol for an MPC operation. In some embodiments, it may support using multiple identifiers and matching according to the priority level when performing the intersection matching. Moreover, during the encryption process, the batch encryption may significantly improve encryption efficiency. In the whole interaction process, the memory occupation of the two parties is low, and both parties do not need to buffer HE ciphertext.

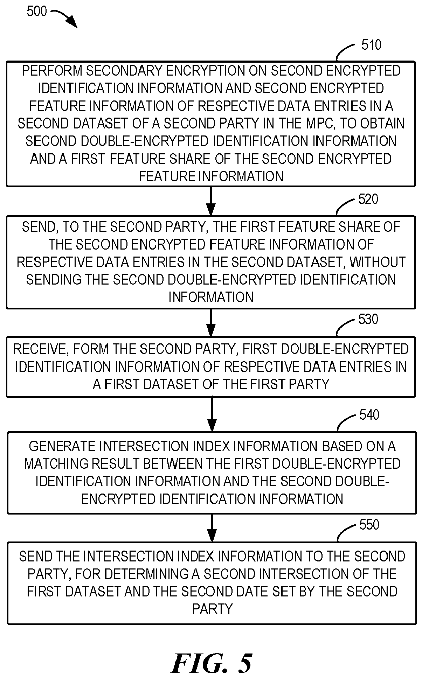

FIG. 5 shows a flowchart of a data processing method 500 implemented at a first party according to some embodiments of the present disclosure. The method 500 may be implemented, for example, by the party 110 of FIG. 1. For the convenience of discussion, the method 500 is described with reference to the environment 100 of FIG. 1.

At block 510, the party 110 performs secondary encryption on second encrypted identification information and second encrypted feature information of respective data entries in a second dataset of a second party in the MPC, to obtain second double-encrypted identification information and a first feature share of the second encrypted feature information.

At block 520, the party 110 sends, to the second party, the first feature share of the second encrypted feature information of respective data entries in the second dataset, without sending the second double-encrypted identification information.

At block 530, the party 110 receives, form the second party, first double-encrypted identification information of respective data entries in a first dataset of the first party.

At block 540, the party 110 generates intersection index information based on a matching result between the first double-encrypted identification information and the second double-encrypted identification information. The intersection index information comprises a true index for at least a pair of data entries and a pseudo index for at least a pair of data entries in the first dataset and the second dataset, identification information of data entries corresponding to the true index being matched, identification information of data entries corresponding to the pseudo index being unmatched.

At block 550, the party 110 sends the intersection index information to the second party for determining the second intersection of the first and second datasets.

In some embodiments, before receiving the first double-encrypted identification information, the method 500 further comprises: encrypting first identification information and first feature information of each data entry in the first dataset, to obtain first encrypted identification information and first encrypted feature information; and sending the first encrypted identification information and the first encrypted feature information to the second party. The first encrypted identification information is used for generating the first double-encrypted identification information by the second party, and the first encrypted feature information is used for generating the first feature share of the first encrypted information by the second party.

In some embodiments, encrypting the first identification information comprises: encrypting, using a first encryption key, the first identification information of respective data entries in the first dataset, to obtain the first encrypted identification information; wherein the first double-encrypted identification information of respective data entries in the first dataset is generated by the second party using the second encryption key to encrypt the first encrypted identification information.

In some embodiments, performing secondary encryption on the second encrypted identification information comprises: performing, using a first encryption key, secondary encryption on the second encrypted identification information, to obtain the second double-encrypted identification information, wherein the first encryption key is further used by the first party to perform primary encryption on first identification information of respective data entries in the first dataset, to obtain first encrypted identification information, and wherein primary encryption of the second double-encrypted identification information and secondary encryption of the first encrypted identification information are performed by the second party using a second encryption key.

In some embodiments, encrypting the first feature information comprises: generating a first public key and a first private key for Homomorphic Encryption; sending the first public key to the second party; and performing, using the first public key, Homomorphic Encryption on the first feature information of respective data entries in the first dataset, to obtain a first encryption feature information.

In some embodiments, encrypting the first feature information comprises: dividing first feature information of respective data entries in the first dataset in sequence into at least one first feature information block, each first feature information block comprising a sequential concatenation of first feature information in a predetermined number of data entries in the first dataset, with predetermined information filled in between two adjacent data entries in each first feature information block; and encrypting the at least one first feature information block, to obtain the first encrypted feature information of the at least one first feature information block.

In some embodiments, the predetermined information is zero, and/or wherein first encrypted identification information of the predetermined number of date entries in each first feature information block is used to index the first feature information block.

In some embodiments, performing the secondary encryption on the second encrypted identification information and the second encrypted feature information of respective data entries in the second dataset comprises: adjusting the sequence of the second encrypted identification information and the second encrypted feature information of respective data entries in the second dataset through random permutation; and performing the secondary encryption on the second encrypted identification information and the second encrypted feature information of respective data entries in the second dataset after adjusting the sequence.

In some embodiments, the second encrypted feature information of respective data entries in the second dataset comprises second encrypted feature information of at least one second feature information block divided from the second dataset, each second feature information block being obtained by dividing second feature information of respective data entries in the second dataset in sequence, each second feature information block comprising a sequential concatenation of second feature information in a predetermined number of data entries in the second dataset, with predetermined information filled in between two adjacent data entries in each second feature information block.

In some embodiments, performing secondary encryption on the second encrypted feature information comprises: generating second feature shares corresponding to respective data entries in the second dataset; dividing the second feature shares corresponding to respective data entries in the second dataset in sequence, to obtain at least one feature share block of the second encrypted feature information, each feature share block comprising a sequential concatenation of second feature shares corresponding to a predetermined number of data entries in the second dataset, with predetermined information filled in between two adjacent second feature shares in each feature share block; and performing, based on the at least one feature share block, a homomorphic addition operation on the second encrypted feature information, to obtain the first feature share of the second encrypted feature information.

In some embodiments, the first feature share of first encrypted feature information of respective data entries in the first dataset and the first double-encrypted identification information are both received from the second party. In some embodiments, the method 500 further comprises: buffering the second double-encrypted identification information of the second dataset and a second feature share of the second encrypted feature information, the second encrypted feature information being divided into the first feature share and the second feature share; decrypting the first feature share of the first encrypted feature information, to obtain a first feature share of first decrypted feature information; and buffering the first double-encrypted identification information of the first dataset and the first feature share of the first decrypted feature information.

In some embodiments, the first double-encrypted identification information comprises a plurality of first double-encrypted identifiers corresponding to a plurality of types, respectively, the second double-encrypted identification information comprises a plurality of second encryption identifiers corresponding to the plurality of types, respectively, and wherein generating the intersection index information comprises: determining the matching result based on priority levels of the plurality of types, the determination of the matching result comprising: determining a first matching result by comparing a first double-encrypted identifier corresponding to a first type in the first double-encrypted identification information and a second double-encrypted identifier corresponding to the first type in the second double-encrypted identification information, in accordance with a determination that the first matching result indicates at least a pair of data entries with matched identification information in the first dataset and the second dataset, filtering out double-encrypted identification information of the at least a pair of matched data entries from the first double-encrypted identification information and the second double-encrypted identification information, to obtain filtered first double-encrypted identification information and filtered second double-encrypted identification information; and determining a second matching result by comparing a first double-encrypted identifier corresponding to a second type in the filtered first double-encrypted identification information and a second double-encrypted identifier corresponding to the second type in the filtered second double-encrypted identification information, a priority level of the second type being lower than a priority level of the first type.

In some embodiments, generating intersection index information further comprises: generating, by traversing at least the second double-encrypted identifier corresponding to a given type in the second double-encrypted identifier information, a portion of the intersection index information for a given type among a plurality of types, wherein the generating comprises: in accordance with a determination that a given matching result between the first double-encrypted identifier corresponding to the given type in the first double-encrypted identification information and the second double-encrypted identifier corresponding to the given type in the second double-encrypted identification information indicates that the identification information of a first data entry in the first dataset matches the identification information of a second data entry in the second dataset, generating a first true index in the intersection index information for indexing the first data entry in the first dataset and the second data entry in the second dataset; in accordance with a determination that the given matching result indicates that the identification information of any data entry in the first dataset does not match the identification information of the second data entry in the second dataset, generating a first pseudo index in the intersection index information for indexing a random data entry in the first dataset and the second data entry in the second dataset.

In some embodiments, the method 500 further comprises: at the first party, generating a first intersection of the first dataset and the second dataset based on the intersection index information, the first intersection comprising at least a pair of data entries corresponding to the true index and at least a pair of data entries corresponding to the pseudo index in the intersection index information; setting a matching flag for each pair of data entries in the first intersection, a matching flag of at least a pair of data entries corresponding to the true index being marked to indicate being matched, a matching flag of at least a pair of data entries corresponding to the pseudo index being marked to indicate being unmatched; performing the MPC together with the second party using the first intersection and the second intersection, to obtain a candidate computation result for each pair of data entries in the first intersection; and determining a target computation result of the MPC based at least on the candidate computation result and the matching flag for each pair of data entries in the first intersection.

In some embodiments, a matching flag bit of a pair of data entries corresponding to the true index is set to 1, a matching flag bit of the pair of data entries corresponding to the pseudo index is set to 0. In some embodiments, determining the target computation result comprises: generating the target computation result based on a multiplication operation on the candidate computation result and the matching flag for each pair of data entries in the first intersection.

In some embodiments, a matching flag for each pair of data entries in the second intersection is set to indicate being unmatched, and a determination of the target computation result is further based on a matching flag for each pair of data entries in the second intersection.

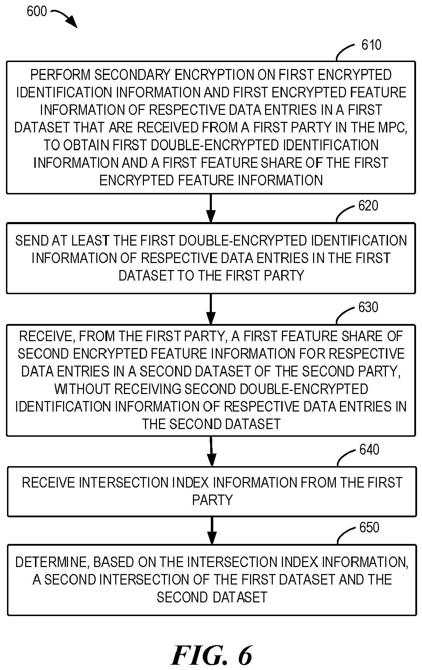

FIG. 6 shows a flowchart of a data processing method 600 implemented at a second party according to some embodiments of the present disclosure. The method 600 may be implemented, for example, at the party 120 of FIG. 1. For the convenience of discussion, the method 600 is described with reference to the environment 100 of FIG. 1.

At block 610, the party 120 performs secondary encryption on first encrypted identification information and first encrypted feature information of respective data entries in a first dataset that are received from a first party in the MPC, to obtain first double-encrypted identification information and a first feature share of the first encrypted feature information.

At block 620, the party 120 sends at least the first double-encrypted identification information of respective data entries in the first dataset to the first party.

At block 630, the party 120 receives, from the first party, a first feature share of second encrypted feature information for respective data entries in a second dataset of the second party, without receiving second double-encrypted identification information of respective data entries in the second dataset.

At block 640, the party 120 receives, intersection index information from the first party. The intersection index information comprises a true index for at least a pair of data entries and a pseudo index for at least a pair of data entries in the first dataset and the second dataset, and identification information of the at least a pair of data entries corresponding to the true index being matched.

At block 650, the party 120 determines, based on the intersection index information, a second intersection of the first dataset and the second dataset. The second intersection comprises at least a pair of data entries corresponding to the true index and at least a pair of data entries corresponding to the pseudo index in the intersection index information.

In some embodiments, the method 600 further comprises: setting a matching flag for each pair of data entries in the second intersection, to indicate that identification information of the pair of data entries is unmatched; performing the MPC together with the first party using a first intersection determined by the first party and the second intersection, to obtain a candidate computation result for each pair of data entries in the second intersection; and determining a target computation result of the MPC based at least on the candidate computation result and a matching flag for each pair of data entries in the second intersection.

In some embodiments, a matching flag for each pair of data entries in the second intersection is set to 0. In some embodiments, a matching flag bit of a pair of data entries corresponding to the true index in the first dataset is set to 1, and a matching flag bit of a pair of data entries corresponding to the pseudo index is set to 0.

In some embodiments, determining the target computation result comprises: generating the target computation result based on a multiplication operation on the candidate computation result and the matching flag for each pair of data entries in the second intersection.

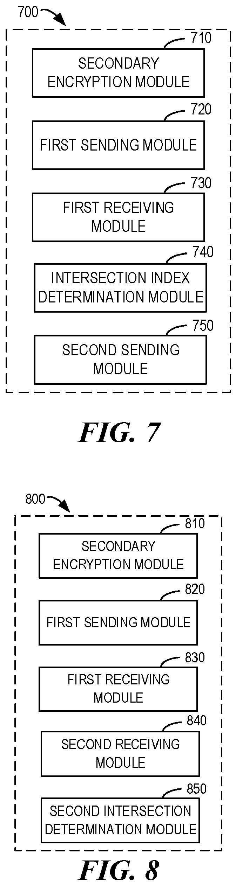

FIG. 7 shows a schematic structural block diagram of a data processing apparatus 700 implemented at a first party according to some embodiments of the present disclosure. The apparatus 700 may be implemented or included in the party 110. Each module/component in the apparatus 700 may be implemented by hardware, software, firmware, or any combination thereof.

As shown in the figure, the apparatus 700 comprises a secondary encryption module 710 configured to perform secondary encryption on second encrypted identification information and second encrypted feature information of respective data entries in a second dataset of a second party in the MPC, to obtain second double-encrypted identification information and a first feature share of the second encrypted feature information. The apparatus 700 further comprises a first sending module 720 configured to send, to the second party, the first feature share of the second encrypted feature information of respective data entries in the second dataset, without sending the second double-encrypted identification information.

The apparatus 700 further comprises a first receiving module 730 configured to receive, form the second party, first double-encrypted identification information of respective data entries in a first dataset of the first party.

The apparatus 700 further comprises an intersection index determination module 740 configured to generate intersection index information based on a matching result between the first double-encrypted identification information and the second double-encrypted identification information, the intersection index information comprising a true index for at least a pair of data entries and a pseudo index for at least a pair of data entries in the first dataset and the second dataset, identification information of data entries corresponding to the true index being matched, identification information of data entries corresponding to the pseudo index being unmatched.

The apparatus 700 further comprises a second sending module 750 configured to send the intersection index information to the second party for determining the second intersection of the first and second datasets.

In some embodiments, the apparatus 700 further comprises an primary encryption module configured to before receiving the first double-encrypted identification information, encrypt first identification information and first feature information of each data entry in the first dataset, to obtain first encrypted identification information and first encrypted feature information; and a third sending module configured to send the first encrypted identification information and the first encrypted feature information to the second party. The first encrypted identification information is used for generating the first double-encrypted identification information by the second party, and the first encrypted feature information is used for generating the first feature share of the first encrypted information by the second party.

In some embodiments, the primary encryption module comprises a first key encryption module configured to encrypt, using a first encryption key, the first identification information of respective data entries in the first dataset, to obtain the first encrypted identification information; wherein the first double-encrypted identification information of respective data entries in the first dataset is generated by the second party using the second encryption key to encrypt the first encrypted identification information.

In some embodiments, the secondary encryption module 710 comprises a first key secondary encryption module configured to perform, using a first encryption key, secondary encryption on the second encrypted identification information, to obtain the second double-encrypted identification information. The first encryption key is further used by the first party to perform primary encryption on first identification information of respective data entries in the first dataset, to obtain first encrypted identification information, and primary encryption of the second double-encrypted identification information and secondary encryption of the first encrypted identification information are performed by the second party using a second encryption key.

In some embodiments, the primary encryption module comprises: a key generation module configured to generate a first public key and a first private key for Homomorphic Encryption; a public key sending module configured to send the first public key to the second party; and a public key encryption module configured to perform, using the first public key, Homomorphic Encryption on the first feature information of respective data entries in the first dataset, to obtain a first encryption feature information.

In some embodiments, the primary encryption module comprises an information division module configured to divide first feature information of respective data entries in the first dataset in sequence into at least one first feature information block, each first feature information block comprising a sequential concatenation of first feature information in a predetermined number of data entries in the first dataset, with predetermined information filled in between two adjacent data entries in each first feature information block; and an information block encryption module configured to encrypt the at least one first feature information block, to obtain the first encrypted feature information of the at least one first feature information block.

In some embodiments, the predetermined information is zero, and/or wherein first encrypted identification information of the predetermined number of date entries in each first feature information block is used to index the first feature information block.

In some embodiments, the secondary encryption module 710 comprises a random permutation module configured to adjust the sequence of the second encrypted identification information and the second encrypted feature information of respective data entries in the second dataset through random permutation; and an after-disorder encryption module configured to perform the secondary encryption on the second encrypted identification information and the second encrypted feature information of respective data entries in the second dataset after adjusting the sequence.

In some embodiments, the second encrypted feature information of respective data entries in the second dataset comprises second encrypted feature information of at least one second feature information block divided from the second dataset, each second feature information block being obtained by dividing second feature information of respective data entries in the second dataset in sequence, each second feature information block comprising a sequential concatenation of second feature information in a predetermined number of data entries in the second dataset, with predetermined information filled in between two adjacent data entries in each second feature information block.

In some embodiments, the secondary encryption module 710 comprises: a feature share generation module configured to generating second feature shares corresponding to respective data entries in the second dataset; a feature share division module configured to divide the second feature shares corresponding to respective data entries in the second dataset in sequence, to obtain at least one feature share block of the second encrypted feature information, each feature share block comprising a sequential concatenation of second feature shares corresponding to a predetermined number of data entries in the second dataset, with predetermined information filled in between two adjacent second feature shares in each feature share block; and a homomorphic addition module configured to perform, based on the at least one feature share block, a homomorphic addition operation on the second encrypted feature information, to obtain the first feature share of the second encrypted feature information.

In some embodiments, the first feature share of first encrypted feature information of respective data entries in the first dataset and the first double-encrypted identification information are both received from the second party. In some embodiments, the apparatus 700 further comprises: a first buffer module configured to buffer the second double-encrypted identification information of the second dataset and a second feature share of the second encrypted feature information, the second encrypted feature information being divided into the first feature share and the second feature share; a first decryption module configured to decrypt the first feature share of the first encrypted feature information, to obtain a first feature share of first decrypted feature information; and a second buffer module configured to buffer the first double-encrypted identification information of the first dataset and the first feature share of the first decrypted feature information.

In some embodiments, the first double-encrypted identification information comprises a plurality of first double-encrypted identifiers corresponding to a plurality of types, respectively, the second double-encrypted identification information comprises a plurality of second encryption identifiers corresponding to the plurality of types, respectively. The intersection index determination module 740 comprises a priority-based matching module configured to determining the matching result based on priority levels of the plurality of types, the determination of the matching result comprising: determining a first matching result by comparing a first double-encrypted identifier corresponding to a first type in the first double-encrypted identification information and a second double-encrypted identifier corresponding to the first type in the second double-encrypted identification information, in accordance with a determination that the first matching result indicates at least a pair of data entries with matched identification information in the first dataset and the second dataset, filtering out double-encrypted identification information of the at least a pair of matched data entries from the first double-encrypted identification information and the second double-encrypted identification information, to obtain filtered first double-encrypted identification information and filtered second double-encrypted identification information; and determining a second matching result by comparing a first double-encrypted identifier corresponding to a second type in the filtered first double-encrypted identification information and a second double-encrypted identifier corresponding to the second type in the filtered second double-encrypted identification information, a priority level of the second type being lower than a priority level of the first type.

In some embodiments, the intersection index determination module 740 further comprises a traversal determination module configured to generate, by traversing at least the second double-encrypted identifier corresponding to a given type in the second double-encrypted identifier information, a portion of the intersection index information for a given type among a plurality of types, wherein the generating comprises: in accordance with a determination that a given matching result between the first double-encrypted identifier corresponding to the given type in the first double-encrypted identification information and the second double-encrypted identifier corresponding to the given type in the second double-encrypted identification information indicates that the identification information of a first data entry in the first dataset matches the identification information of a second data entry in the second dataset, generating a first true index in the intersection index information for indexing the first data entry in the first dataset and the second data entry in the second dataset; in accordance with a determination that the given matching result indicates that the identification information of any data entry in the first dataset does not match the identification information of the second data entry in the second dataset, generating a first pseudo index in the intersection index information for indexing a random data entry in the first dataset and the second data entry in the second dataset.

In some embodiments, the apparatus 700 further comprises a first intersection generation module configured to at the first party, generating a first intersection of the first dataset and the second dataset based on the intersection index information, the first intersection comprising at least a pair of data entries corresponding to the true index and at least a pair of data entries corresponding to the pseudo index in the intersection index information; a flag setting module configured to set a matching flag for each pair of data entries in the first intersection, a matching flag of at least a pair of data entries corresponding to the true index being marked to indicate being matched, a matching flag of at least a pair of data entries corresponding to the pseudo index being marked to indicate being unmatched; an MPC operation module configured to perform the MPC together with the second party using the first intersection and the second intersection, to obtain a candidate computation result for each pair of data entries in the first intersection; and a target result determination module configured to determine a target computation result of the MPC based at least on the candidate computation result and the matching flag for each pair of data entries in the first intersection.

In some embodiments, a matching flag bit of a pair of data entries corresponding to the true index is set to 1, a matching flag bit of the pair of data entries corresponding to the pseudo index is set to 0. In some embodiments, the target result determination module configured to generating the target computation result based on a multiplication operation on the candidate computation result and the matching flag for each pair of data entries in the first intersection.

In some embodiments, a matching flag for each pair of data entries in the second intersection is set to indicate being unmatched, and a determination of the target computation result is further based on a matching flag for each pair of data entries in the second intersection.

FIG. 8 shows a schematic structural block diagram of a data processing apparatus 800 implemented at a second party according to some embodiments of the present disclosure. The apparatus 800 may be implemented or included in the party 120. Each module/component in the apparatus 800 may be implemented by hardware, software, firmware, or any combination thereof.

As shown in the figure, the apparatus 800 comprises a secondary encryption module 810 configured to perform secondary encryption on first encrypted identification information and first encrypted feature information of respective data entries in a first dataset that are received from a first party in the MPC, to obtain first double-encrypted identification information and a first feature share of the first encrypted feature information. The apparatus 800 further comprises a first sending module 820 configured to send at least the first double-encrypted identification information of respective data entries in the first dataset to the first party.

The apparatus 800 further comprises a first receiving module 830 configured to receive, from the first party, a first feature share of second encrypted feature information for respective data entries in a second dataset of the second party, without receiving second double-encrypted identification information of respective data entries in the second dataset.

The apparatus 800 further comprises a second receiving module 840 configured to receive, intersection index information from the first party, the intersection index information comprising a true index for at least a pair of data entries and a pseudo index for at least a pair of data entries in the first dataset and the second dataset, and identification information of the at least a pair of data entries corresponding to the true index being matched.

The apparatus 800 further comprises a second intersection determination module 850 configured to determine, based on the intersection index information, a second intersection of the first dataset and the second dataset, and the second intersection comprising at least a pair of data entries corresponding to the true index and at least a pair of data entries corresponding to the pseudo index in the intersection index information.

In some embodiments, the apparatus 800 further comprises a flag setting module configured to set a matching flag for each pair of data entries in the second intersection, to indicate that identification information of the pair of data entries is unmatched; an MPC operation module configured to perform the MPC together with the first party using a first intersection determined by the first party and the second intersection, to obtain a candidate computation result for each pair of data entries in the second intersection; and a target result determination module configured to determine a target computation result of the MPC based at least on the candidate computation result and a matching flag for each pair of data entries in the second intersection.

In some embodiments, a matching flag for each pair of data entries in the second intersection is set to 0. In some embodiments, a matching flag bit of a pair of data entries corresponding to the true index in the first dataset is set to 1, and a matching flag bit of a pair of data entries corresponding to the pseudo index is set to 0.

In some embodiments, the target result determination module is configured to generate the target computation result based on a multiplication operation on the candidate computation result and the matching flag for each pair of data entries in the second intersection.

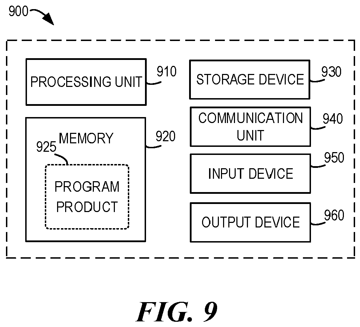

FIG. 9 shows a block diagram of an electronic device 900 in which one or more embodiments of the present disclosure may be implemented. It would be appreciated that the electronic device 900 shown in FIG. 9 is only an example and should not constitute any restriction on the function and scope of the embodiments described herein. The electronic device 900 shown in FIG. 9 may be used to implement the party 110 or the party 120 of FIG. 1, the apparatus 700 of FIG. 7 or the apparatus 800 of FIG. 8.

As shown in FIG. 9, the electronic device 900 is in the form of a general computing device. The components of the electronic device 900 may include, but are not limited to, one or more processors or processing units 910, a memory 920, a storage device 930, one or more communication units 940, one or more input devices 950, and one or more output devices 960. The processing unit 910 may be an actual or virtual processor and can execute various processes according to the programs stored in the memory 920. In a multiprocessor system, multiple processing units execute computer executable instructions in parallel to improve the parallel processing capability of the electronic device 900.

The electronic device 900 typically includes a variety of computer storage medium. Such medium may be any available medium that is accessible to the electronic device 900, including but not limited to volatile and non-volatile medium, removable and non-removable medium. The memory 920 may be volatile memory (for example, a register, cache, a random access memory (RAM)), a non-volatile memory (for example, a read-only memory (ROM), an electrically erasable programmable read-only memory (EEPROM), a flash memory) or any combination thereof. The storage device 930 may be any removable or non-removable medium, and may include a machine-readable medium, such as a flash drive, a disk, or any other medium, which can be used to store information and/or data (such as training data for training) and can be accessed within the electronic device 900.

The electronic device 900 may further include additional removable/non-removable, volatile/non-volatile storage medium. Although not shown in FIG. 9, a disk driver for reading from or writing to a removable, non-volatile disk (such as a "floppy disk"), and an optical disk driver for reading from or writing to a removable, non-volatile optical disk can be provided. In these cases, each driver may be connected to the bus (not shown) by one or more data medium interfaces. The memory 920 may include a computer program product 925, which has one or more program modules configured to perform various methods or acts of various embodiments of the present disclosure.

The communication unit 940 communicates with a further computing device through the communication medium. In addition, functions of components in the electronic device 900 may be implemented by a single computing cluster or multiple computing machines, which can communicate through a communication connection. Therefore, the electronic device 900 may be operated in a networking environment using a logical connection with one or more other servers, a network personal computer (PC), or another network node.

The input device 950 may be one or more input devices, such as a mouse, a keyboard, a trackball, etc. The output device 960 may be one or more output devices, such as a display, a speaker, a printer, etc. The electronic device 900 may also communicate with one or more external devices (not shown) through the communication unit 940 as required. The external device, such as a storage device, a display device, etc., communicate with one or more devices that enable users to interact with the electronic device 900, or communicate with any device (for example, a network card, a modem, etc.) that makes the electronic device 900 communicate with one or more other computing devices. Such communication may be executed via an input/output (I/O) interface (not shown).

According to example implementation of the present disclosure, a computer-readable storage medium is provided, on which a computer-executable instruction or computer program is stored, wherein the computer-executable instructions or the computer program is executed by the processor to implement the method described above.

According to example implementation of the present disclosure, a computer program product is also provided. The computer program product is physically stored on a non-transient computer-readable medium and includes computer-executable instructions, which are executed by the processor to implement the method described above.

Various aspects of the present disclosure are described herein with reference to the flow chart and/or the block diagram of the method, the device, the equipment and the computer program product implemented in accordance with the present disclosure. It would be appreciated that each block of the flowchart and/or the block diagram and the combination of each block in the flowchart and/or the block diagram may be implemented by computer-readable program instructions.

These computer-readable program instructions may be provided to the processing units of general-purpose computers, special computers or other programmable data processing devices to produce a machine that generates a device to implement the functions/acts specified in one or more blocks in the flow chart and/or the block diagram when these instructions are executed through the processing units of the computer or other programmable data processing devices. These computer-readable program instructions may also be stored in a computer-readable storage medium. These instructions enable a computer, a programmable data processing device and/or other devices to work in a specific way. Therefore, the computer-readable medium containing the instructions includes a product, which includes instructions to implement various aspects of the functions/acts specified in one or more blocks in the flowchart and/or the block diagram.

The computer-readable program instructions may be loaded onto a computer, other programmable data processing apparatus, or other devices, so that a series of operational steps can be performed on a computer, other programmable data processing apparatus, or other devices, to generate a computer-implemented process, such that the instructions which execute on a computer, other programmable data processing apparatus, or other devices implement the functions/acts specified in one or more blocks in the flowchart and/or the block diagram.

The flowchart and the block diagram in the drawings show the possible architecture, functions and operations of the system, the method and the computer program product implemented in accordance with the present disclosure. In this regard, each block in the flowchart or the block diagram may represent a part of a module, a program segment or instructions, which contains one or more executable instructions for implementing the specified logic function. In some alternative implementations, the functions marked in the block may also occur in a different order from those marked in the drawings. For example, two consecutive blocks may actually be executed in parallel, and sometimes can also be executed in a reverse order, depending on the function involved. It should also be noted that each block in the block diagram and/or the flowchart, and combinations of blocks in the block diagram and/or the flowchart, may be implemented by a dedicated hardware-based system that performs the specified functions or acts, or by the combination of dedicated hardware and computer instructions.

Each implementation of the present disclosure has been described above. The above description is exemplary, not exhaustive, and is not limited to the disclosed implementations. Without departing from the scope and spirit of the described implementations, many modifications and changes are obvious to ordinary skill in the art. The selection of terms used in this article aims to best explain the principles, practical application or improvement of technology in the market of each implementation, or to enable other ordinary skill in the art to understand the various embodiments disclosed herein.

## Claims

1. A data processing method (500) implemented at a first party (C) in secure multi-party computation (MPC), the method comprising:

performing (510) secondary encryption on second encrypted identification information ($Pid'_{i,j}$) and second encrypted feature information ($\tilde{V}_{i',j}$) of respective data entries in a second dataset of a second party (P) in the MPC, to obtain second double-encrypted identification information ($\widetilde{Pid}_{i,j}$) and a first feature share ($[\widetilde{V_{i',j}}]_0$) of the second encrypted feature information;

sending (520), to the second party (P), the first feature share ($[\widetilde{V_{i',j}}]_0$) of the second encrypted feature information of respective data entries in the second dataset, without sending the second double-encrypted identification information ($\widetilde{Pid}_{i,j}$);

receiving (530), form the second party (P), first double-encrypted identification information ($\widetilde{Cid}_{i,j}$) of respective data entries in a first dataset of the first party;

generating (540) intersection index information based on a matching result between the first double-encrypted identification information ($\widetilde{Cid}_{i,j}$) and the second double-encrypted identification information ($\widetilde{Pid}_{i,j}$), the intersection index information comprising a true index for at least a pair of data entries and a pseudo index for at least a pair of data entries in the first dataset and the second dataset, identification information of data entries corresponding to the true index being matched, identification information of data entries corresponding to the pseudo index being unmatched; and

sending (550) the intersection index information to the second party (P), for determining a second intersection of the first dataset and the second date set by the second party.

2. The method of claim 1, wherein performing secondary encryption on the second encrypted identification information ($Pid'_{i,j}$) comprises:

performing, using a first encryption key ($r_c$), secondary encryption on the second encrypted identification information ($Pid'_{i,j}$), to obtain the second double-encrypted identification information ($\widetilde{Pid}_{i,j}$),

wherein the first encryption key ($r_c$) is further used by the first party to perform primary encryption on first identification information ($Cid_{i,j}$) of respective data entries in the first dataset, to obtain first encrypted identification information ($Cid'_{i,j}$), and

wherein primary encryption of the second double-encrypted identification information ($\widetilde{Pid}_{i,j}$) and secondary encryption of the first encrypted identification information ($Cid'_{i,j}$) are performed by the second party using a second encryption key ($r_p$).

3. The method of claim 2, wherein encrypting the first feature information ($u_{i,j}$) comprises:

dividing first feature information ($u_{i,j}$) of respective data entries in the first dataset in sequence into at least one first feature information block ($U_{i',j}$), each first feature information block comprising a sequential concatenation of first feature information in a predetermined number (B) of data entries in the first dataset, with predetermined information filled in between two adjacent data entries in each first feature information block; and

encrypting the at least one first feature information block ($U_{i',j}$), to obtain the first encrypted feature information ($\tilde{U}_{i',j}$) of the at least one first feature information block ($U_{i',j}$).

4. The method of claim 3, wherein the predetermined information is zero, and/or wherein first encrypted identification information ($Cid'_{i,j}$) of the predetermined number of date entries in each first feature information block is used to index the first feature information block ($U_{i',j}$).

5. The method of claim 1, wherein the second encrypted feature information ($\tilde{V}_{i',j}$) of respective data entries in the second dataset comprises second encrypted feature information ($\tilde{V}_{i',j}$) of at least one second feature information block ($V_{i',j}$) divided from the second dataset, each second feature information block ($V_{i',j}$) being obtained by dividing second feature information of respective data entries in the second dataset in sequence, each second feature information block ($V_{i',j}$) comprising a sequential concatenation of second feature information in a predetermined number (B) of data entries in the second dataset, with predetermined information filled in between two adjacent data entries in each second feature information block; and

wherein performing secondary encryption on the second encrypted feature information ($\tilde{V}_{i',j}$) comprises:

> generating second feature shares ($\gamma_{i,j}$) corresponding to respective data entries in the second dataset;
>
> dividing the second feature shares corresponding to respective data entries in the second dataset in sequence, to obtain at least one feature share block ($[V_{i',j}]_1$) of the second encrypted feature information ($\tilde{V}_{i',j}$), each feature share block comprising a sequential concatenation of second feature shares corresponding to a predetermined number (B) of data entries in the second dataset, with predetermined information filled in between two adjacent second feature shares in each feature share block; and
>
> performing, based on the at least one feature share block ($[V_{i',j}]_1$), a homomorphic addition operation on the second encrypted feature information ($\tilde{V}_{i',j}$), to obtain the first feature share ($[\widetilde{V_{i',j}}]_0$) of the second encrypted feature information ($\tilde{V}_{i',j}$).

6. The method of claim 1, wherein the first feature share ($[\widetilde{U_{i',j}}]_0$) of first encrypted feature information of respective data entries in the first dataset and the first double-encrypted identification information ($\widetilde{Cid}_{i,j}$) are both received from the second party, the method further comprising:

> buffering the second double-encrypted identification information ($\widetilde{Pid}_{i,j}$) of the second dataset and a second feature share ($[\widetilde{V_{i',j}}]_1$) of the second encrypted feature information, the second encrypted feature information being divided into the first feature share ($[\widetilde{V_{i',j}}]_0$) and the second feature share ($[\widetilde{V_{i',j}}]_1$);
>
> decrypting the first feature share ($[\widetilde{U_{i',j}}]_0$) of the first encrypted feature information, to obtain a first feature share ($[U_{i',j}]_0$) of first decrypted feature information; and

buffering the first double-encrypted identification information ($\widetilde{Cid}_{i,j}$) of the first dataset and the first feature share ($[U_{i',j}]_0$) of the first decrypted feature information.

7. The method of claim 1, wherein the first double-encrypted identification information ($\widetilde{Cid}_{i,j}$) comprises a plurality of first double-encrypted identifiers corresponding to a plurality of types, respectively, the second double-encrypted identification information ($\widetilde{Pid}_{i,j}$) comprises a plurality of second encryption identifiers corresponding to the plurality of types, respectively, and wherein generating the intersection index information comprises:
   determining the matching result based on priority levels of the plurality of types, the determination of the matching result comprising:

> determining a first matching result by comparing a first double-encrypted identifier corresponding to a first type in the first double-encrypted identification information ($\widetilde{Cid}_{i,j}$) and a second double-encrypted identifier corresponding to the first type in the second double-encrypted identification information ($\widetilde{Pid}_{i,j}$), in accordance with a determination that the first matching result indicates at least a pair of data entries with matched identification information in the first dataset and the second dataset, filtering out double-encrypted identification information of the at least a pair of matched data entries from the first double-encrypted identification information ($\widetilde{Cid}_{i,j}$) and the second double-encrypted identification information ($\widetilde{Pid}_{i,j}$), to obtain filtered first double-encrypted identification information and filtered second double-encrypted identification information; and
>
> determining a second matching result by comparing a first double-encrypted identifier corresponding to a second type in the filtered first double-encrypted identification information and a second double-encrypted identifier corresponding to the second type in the filtered second double-encrypted identification information, a priority level of the second type being lower than a priority level of the first type.

8. The method of claim 1, further comprising:

at the first party (C), generating a first intersection of the first dataset and the second dataset based on the intersection index information, the first intersection comprising at least a pair of data entries corresponding to the true index and at least a pair of data entries corresponding to the pseudo index in the intersection index information;

setting a matching flag for each pair of data entries in the first intersection, a matching flag of at least a pair of data entries corresponding to the true index being marked to indicate being matched, a matching flag of at least a pair of data entries corresponding to the pseudo index being marked to indicate being unmatched;

performing the MPC together with the second party using the first intersection and the second intersection, to obtain a candidate computation result for each pair of data entries in the first intersection; and

determining a target computation result of the MPC based at least on the candidate computation result and the matching flag for each pair of data entries in the first intersection.

9. The method of claim 8, wherein a matching flag bit of a pair of data entries corresponding to the true index is set to 1, a matching flag bit of the pair of data entries corresponding to the pseudo index is set to 0, and wherein determining the target computation result comprises:

generating the target computation result based on a multiplication operation on the candidate computation result and the matching flag for each pair of data entries in the first intersection.

10. The method of claim 8, wherein a matching flag for each pair of data entries in the second intersection is set to indicate being unmatched, and a determination of the target computation result is further based on a matching flag for each pair of data entries in the second intersection.

11. A data processing method (600) implemented at a second party (P) in secure multi-party computing (MPC), the method comprising:

performing (610) secondary encryption on first encrypted identification information ($Cid'_{i,j}$) and first encrypted feature information ($\tilde{U}_{i',j}$) of respective data entries in a first dataset that are received from a first party (C) in the MPC, to obtain first double-encrypted identification information $(\widetilde{Cid}_{i,j})$ and a first feature share

$([\widetilde{U_{i',j}}]_0)$ of the first encrypted feature information $([\widetilde{U_{i',j}}]_0)$;

sending (620) at least the first double-encrypted identification information $(\widetilde{Cid}_{i,j})$ of respective data entries in the first dataset to the first party (C);

receiving (630), from the first party (C), a first feature share $([\widetilde{V_{i',j}}]_0)$ of second encrypted feature information for respective data entries in a second dataset of the second party (P), without receiving second double-encrypted identification information $(\widetilde{Pid}_{i,j})$ of respective data entries in the second dataset;

receiving (640) intersection index information from the first party (C), the intersection index information comprising a true index for at least a pair of data entries and a pseudo index for at least a pair of data entries in the first dataset and the second dataset, and identification information of the at least a pair of data entries corresponding to the true index being matched; and

determining (650), based on the intersection index information, a second intersection of the first dataset and the second dataset, the second intersection comprising at least a pair of data entries corresponding to the true index and at least a pair of data entries corresponding to the pseudo index in the intersection index information.

12. The method of claim 11, further comprising:

setting a matching flag for each pair of data entries in the second intersection, to indicate that identification information of the pair of data entries is unmatched;

performing the MPC together with the first party (C) using a first intersection determined by the first party (C) and the second intersection, to obtain a candidate computation result for each pair of data entries in the second intersection; and

determining a target computation result of the MPC based at least on the candidate computation result and a matching flag for each pair of data entries in the second intersection.

13. The method of claim 12, wherein a matching flag for each pair of data entries in the second intersection is set to 0, and

wherein a matching flag bit of a pair of data entries corresponding to the true index in the first dataset is set to 1, and a matching flag bit of a pair of data entries corresponding to the pseudo index is set to 0.

14. The method of claim 13, wherein determining the target computation result comprises:
generating the target computation result based on a multiplication operation on the candidate computation result and the matching flag for each pair of data entries in the second intersection.

15. An electronic device (900), comprising:

at least one processing unit (910); and
at least one memory (920) coupled to the at least one processing unit (910) and storing instructions executable by the at least one processing unit (910), the instructions, when executed by the at least one processing unit (910), causing the device (900) to perform the method of any of claims 1-10 or any of claims 11-14.

**FIG. 1**

*FIG. 2*

PARTY C DATASET 112

DOUBLE-ENCRYPTED
ID+FEATURE SHARE — 310

| [rp][rc]a | x1 |
|---|---|
| [rp][rc]c | x2 |
| [rp][rc]b | x3 |
| [rp][rc]e | x4 |
| [rp][rc]c | x4 |

PARTY P DATASET 122

DOUBLE-ENCRYPTED
ID+FEATURE SHARE — 320

| [rc][rp]b | y1 |
|---|---|
| [rc][rp]c | y2 |
| [rc][rp]c | y3 |
| [rc][rp]f | y4 |

INTERSECTION INDEX
INFORMTION — 330

| 3 | [1, 2] | 0 | -1 | [1, 2] |
|---|---|---|---|---|

— 120

PARTY P

— 340

| ID | FEATURE 1 | FEATURE 2 |
|---|---|---|
| [rp][rc]a | x1 | y4 |
| [rp][rc]c | x2 | y2 |
| [rp][rc]c | x2 | y3 |
| [rp][rc]b | x3 | y1 |
| [rp][rc]c | x4 | y2 |
| [rp][rc]c | x4 | y3 |

*FIG. 3*

400

112

| ID | FEATURE 1 |
|----|-----------|
| a | 10 |
| b | 21 |
| c | 7 |
| e | 17 |

PARTY C — 110

MESSAGE 1 — 406

| [rp]c | 8 |
|-------|---|
| [rp]f | 11 |
| [rp]b | 17 |
| [rp]d | 4 |

PARTY P — 120

122

| ID | FEATURE 2 |
|----|-----------|
| b | 17 |
| c | 8 |
| f | 11 |
| d | 4 |

405
1.<ID， FEATURE 2> DISORDER PROCESSING
2.ID RANDOMIZATION(USING KEY rp)
3.FEATURE 2 ENCRYPTION (HOMOMORPHIC ENCRYPTION、PARTY P KEY)

PRIMARY ENCRYPTION STAGE

MESSAGE 2

| [rc]b | 21 |
|-------|----|
| [rc]c | 7 |
| [rc]a | 10 |
| [rc]e | 17 |

412

410
1.<ID， FEATURE 1>DISORDER PROCESSING
2.ID RANDOMIZATION(USING KEY rc)
3.FEATURE 1 ENCRYPTION (HOMOMORPHIC ENCRYPTION、PARTY C KEY)

420
1.<[rc]ID,Enc{FEATURE 1}>
DISORDER PROCESSING
2.COMPUTE [rp][rc]ID
3.SECRET DIVIDING ON FEATURE 1，GENERATE A FEATURE SHARE

415
1.<[rp]ID.Enc{FEATURE 2}>
DISORDER PROCESSING
2.COMPUTE [rc][rp]ID
3.SECRET DIVIDING ON FEATURE 2，GENERATE A FEATURE SHARE

SECONDARY ENCRYPTION STAGE

BUFFER OF PARTY C

418

| [rc][rp]b | 11 |
|-----------|----|
| [rc][rp]d | -3 |
| [rc][rp]c | 4 |
| [rc][rp]f | 8 |

426

| [rp][rc]a | 4 |
|-----------|----|
| [rp][rc]c | 3 |
| [rp][rc]b | 18 |
| [rp][rc]e | 15 |

MESSAGE 3.1 — 416

| 6=17-11 |
|---------|
| 7=4+3 |
| 4=8-4 |
| 3=11-8 |

MESSAGE 3.2 — 426

| [rp][rc]a | 4=10-6 |
|-----------|--------|
| [rp][rc]c | 3=7-4 |
| [rp][rc]b | 18=21-3 |
| [rp][rc]e | 15=17-2 |

428

| [rp][rc]a | 6 |
|-----------|---|
| [rp][rc]c | 4 |
| [rp][rc]b | 3 |
| [rp][rc]e | 2 |

BUFFER OF PARTY p

416

| 6 |
|---|
| 7 |
| 4 |
| 3 |

418

| [rc][rp]b | 11 |
|-----------|----|
| [rc][rp]d | -3 |
| [rc][rp]c | 4 |
| [rc][rp]f | 8 |

426

| [rp][rc]a | 4 |
|-----------|----|
| [rp][rc]c | 3 |
| [rp][rc]b | 18 |
| [rp][rc]e | 15 |

442

| ID | FEATURE 1 | FEATURE 2 |
|----|-----------|-----------|
| [rp][rc]a | 4 | # |
| [rp][rc]c | 3 | 4 |
| [rp][rc]b | 18 | 11 |
| [rp][rc]e | 15 | # |

INTERSECTION INDEX INFORMATION

434
# (ARBITRARY SELECTION)
2
0
-1

INTERSECTION MATCHING STAGE

440
1.COMPUTE AN INTERSECTION USING THE BUFFERED DOUBLE-ENCRYPTED IDENTIFICATION ID OF BOTH PARTIES, AND RANDOMLY SELECT A PSEUDO INDEX;
2.GENERATE INTERSECTION INDEX INFORMATION ACCORDING TO THE INTERSECTION INDEX INFORMATION AND THE SEQUENCE OF MESSAGE 3.2

434
[#, 2, 0, -1]

MESSAGE 4

436

| ID | FEATURE 1 | FEATURE 2 |
|----|-----------|-----------|
| [rp][rc]a | 6 | # |
| [rp][rc]c | 4 | 4 |
| [rp][rc]b | 3 | 6 |
| [rp][rc]e | 15 | # |

440
GENERATE A FIRST INTERSECTION AND is_real FLAG BIT

445
GENERATE A SECOND INTERSECTION AND is_real FLAG BIT

442

| ID | FEATURE 1 | FEATURE 2 | is_real flag |
|----|-----------|-----------|--------------|
| [rp][rc]a | 4 | # | 0 |
| [rp][rc]c | 3 | 4 | 1 |
| [rp][rc]b | 18 | 11 | 1 |
| [rp][rc]e | 15 | # | 0 |

452

| ID | FEATURE 1 | FEATURE 2 | is_real flag |
|----|-----------|-----------|--------------|
| [rp][rc]a | 6 | # | 0 |
| [rp][rc]c | 4 | 4 | 0 |
| [rp][rc]b | 3 | 6 | 0 |
| [rp][rc]e | 15 | # | 0 |

*FIG. 4*

500

510

PERFORM SECONDARY ENCRYPTION ON SECOND ENCRYPTED
IDENTIFICATION INFORMATION AND SECOND ENCRYPTED
FEATURE INFORMATION OF RESPECTIVE DATA ENTRIES IN A
SECOND DATASET OF A SECOND PARTY IN THE MPC, TO OBTAIN
SECOND DOUBLE-ENCRYPTED IDENTIFICATION INFORMATION
AND A FIRST FEATURE SHARE OF THE SECOND ENCRYPTED
FEATURE INFORMATION

520

SEND, TO THE SECOND PARTY, THE FIRST FEATURE SHARE OF
THE SECOND ENCRYPTED FEATURE INFORMATION OF
RESPECTIVE DATA ENTRIES IN THE SECOND DATASET, WITHOUT
SENDING THE SECOND DOUBLE-ENCRYPTED IDENTIFICATION
INFORMATION

530

RECEIVE, FORM THE SECOND PARTY, FIRST DOUBLE-ENCRYPTED
IDENTIFICATION INFORMATION OF RESPECTIVE DATA ENTRIES IN
A FIRST DATASET OF THE FIRST PARTY

540

GENERATE INTERSECTION INDEX INFORMATION BASED ON A
MATCHING RESULT BETWEEN THE FIRST DOUBLE-ENCRYPTED
IDENTIFICATION INFORMATION AND THE SECOND DOUBLE-
ENCRYPTED IDENTIFICATION INFORMATION

550

SEND THE INTERSECTION INDEX INFORMATION TO THE SECOND
PARTY, FOR DETERMINING A SECOND INTERSECTION OF THE
FIRST DATASET AND THE SECOND DATE SET BY THE SECOND
PARTY

*FIG. 5*

600 ⟍

610

PERFORM SECONDARY ENCRYPTION ON FIRST ENCRYPTED IDENTIFICATION INFORMATION AND FIRST ENCRYPTED FEATURE INFORMATION OF RESPECTIVE DATA ENTRIES IN A FIRST DATASET THAT ARE RECEIVED FROM A FIRST PARTY IN THE MPC, TO OBTAIN FIRST DOUBLE-ENCRYPTED IDENTIFICATION INFORMATION AND A FIRST FEATURE SHARE OF THE FIRST ENCRYPTED FEATURE INFORMATION

620

SEND AT LEAST THE FIRST DOUBLE-ENCRYPTED IDENTIFICATION INFORMATION OF RESPECTIVE DATA ENTRIES IN THE FIRST DATASET TO THE FIRST PARTY

630

RECEIVE, FROM THE FIRST PARTY, A FIRST FEATURE SHARE OF SECOND ENCRYPTED FEATURE INFORMATION FOR RESPECTIVE DATA ENTRIES IN A SECOND DATASET OF THE SECOND PARTY, WITHOUT RECEIVING SECOND DOUBLE-ENCRYPTED IDENTIFICATION INFORMATION OF RESPECTIVE DATA ENTRIES IN THE SECOND DATASET

640

RECEIVE INTERSECTION INDEX INFORMATION FROM THE FIRST PARTY

650

DETERMINE, BASED ON THE INTERSECTION INDEX INFORMATION, A SECOND INTERSECTION OF THE FIRST DATASET AND THE SECOND DATASET

*FIG. 6*

700

710
SECONDARY
ENCRYPTION MODULE

720
FIRST SENDING MODULE

730
FIRST RECEIVING
MODULE

740
INTERSECTION INDEX
DETERMINATION MODULE

750
SECOND SENDING
MODULE

*FIG. 7*

800

810
SECONDARY
ENCRYPTION MODULE

820
FIRST SENDING MODULE

830
FIRST RECEIVING
MODULE

840
SECOND RECEIVING
MODULE

850
SECOND INTERSECTION
DETERMINATION MODULE

*FIG. 8*

900

PROCESSING UNIT — 910

STORAGE DEVICE — 930

MEMORY — 920

925 — 

PROGRAM PRODUCT

COMMUNICATION UNIT — 940

INPUT DEVICE — 950

OUTPUT DEVICE — 960

*FIG. 9*

Europäisches
Patentamt

European
Patent Office

Office européen
des brevets

## EUROPEAN SEARCH REPORT

Application Number

EP 23 19 0147

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PRASAD BUDDHAVARAPU ET AL: "Private Matching for Compute", IACR, INTERNATIONAL ASSOCIATION FOR CRYPTOLOGIC RESEARCH , vol. 20200522:151524 21 May 2020 (2020-05-21), pages 1-20, XP061035885, Retrieved from the Internet: URL:http://eprint.iacr.org/2020/599.pdf [retrieved on 2020-05-21] | 1-15 | INV. H04L9/00 H04L9/08 |
| Y | * section 4.1; figure 4 * | 3-5 | |
| X | WO 2023/014929 A1 (AMAZON TECH INC [US]) 9 February 2023 (2023-02-09) * figures 3-6 * | 1-15 | |
| Y | MIAO PEIHAN ET AL: "Two-Sided Malicious Security for Private Intersection-Sum with Cardinality", 10 August 2020 (2020-08-10), TOPICS IN CRYPTOLOGY - CT-RSA 2020 : THE CRYPTOGRAPHERS' TRACK AT THE RSA CONFERENCE 2020, SAN FRANCISCO, CA, USA, FEBRUARY 24-28, 2020, CORNELL UNIVERSITY LIBRARY, 201 OLIN LIBRARY CORNELL UNIVERSITY ITHACA, NY 14853, PAGE(S) 3 - 33, XP047558385, [retrieved on 2020-08-10] * section 5 * | 3-5 | TECHNICAL FIELDS SEARCHED (IPC) H04L |

The present search report has been drawn up for all claims

| Place of search | Date of completion of the search | Examiner |
|---|---|---|
| Munich | 22 January 2024 | Billet, Olivier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 19 0147**

This annex lists the patent family members relating to the patent documents cited in the above-mentioned European search report.
The members are as contained in the European Patent Office EDP file on
The European Patent Office is in no way liable for these particulars which are merely given for the purpose of information.

**22-01-2024**

| Patent document cited in search report | | Publication date | Patent family member(s) | | Publication date |
|---|---|---|---|---|---|
| WO 2023014929 | A1 | 09-02-2023 | US | 2023053566 A1 | 23-02-2023 |
| | | | WO | 2023014929 A1 | 09-02-2023 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310667243X